# EUROPEAN PATENT APPLICATION

(11) **EP 4 718 800 A1**
(43) Date of publication of application: **01.04.2026**
(21) Application number: 25205094.3
(22) Date of filing: 26.09.2025
(51) Int. Cl.: H04L 41/0631, H04L 41/142, H04L 41/14, H04L 41/16

(54) **IDENTIFYING ASSOCIATED ANOMALIES OF A KEY ANOMALY IN A NETWORK**

(30) Priority: 30.09.2024 US 202463701474 P; 17.09.2025 US 202519331637
(71) Applicant: Juniper Networks, Inc., Sunnyvale, CA 94089-1206 (US)
(72) Inventor: MIRIYALA, Prasad, Sunnyvale, 94089 (US); RATKOVIC, Aleksandar Luka, Sunnyvale, 94089 (US); VAIDYA, Khushi, Sunnyvale, 94089 (US); ABDELOUAHAB, Mehdi, Sunnyvale, 94089 (US)
(74) Representative: D Young & Co LLP

(57) **Abstract**

In general, this disclosure describes techniques for analyzing anomalies in a network. In an example, a method comprises obtaining, by a system, a graph query and a network graph for a network, wherein the network graph includes one or more nodes having one or more properties that indicate a plurality of anomalies for the network; executing, by the system, the graph query on the network graph for the network to determine a matching subgraph of the network graph, wherein the graph query matches on the one or more nodes and the one or more properties; and based on the determination of the matching subgraph, outputting an indication of an association of the plurality of anomalies.

## Description

This application claims the benefit of US Patent Application No. 19/331,637, filed 17 September 2025 and of US Provisional Patent Application No. 63/701,474, filed 30 September 2024, the content of each of which being incorporated by reference hereinto.

### TECHNICAL FIELD

The disclosure relates to computer networks, and more particularly, to anomalies in a network system.

### BACKGROUND

A computer network is a collection of interconnected computing devices that can exchange data and share resources. A variety of devices operate to facilitate communication between the computing devices. For example, a computer network may include routers, switches, gateways, firewalls, and a variety of other devices to provide and facilitate network communication. In some cases, a computer network may be implemented in a data center having hundreds or even thousands of network devices that are part of the network.

A network management system (NMS) enables administrators to monitor, configure, and manage network devices. The interaction between the NMS and the network to configure network devices ensures the network is set up according to the desired configuration, operates correctly, and can be maintained efficiently. After discovering devices and establishing communication, the NMS can perform network configuration tasks. These tasks are executed based on the network administrator's policies, rules, or specific commands. Configuration tasks may include device configuration, which involves applying configuration files or templates to routers, switches, firewalls, etc., and may include setting Internet Protocol (IP) addresses, Virtual Local Area Networks (VLANs), access control lists (ACLs), routing protocols, or other device-specific settings. Configuration tasks may also include configuring network policies, such as quality of service (QoS), traffic prioritization, security rules, and firewall policies. Configuration tasks may also include setting up services such as Dynamic Host Configuration Protocol (DHCP), Domain Name Service (DNS), network time protocol (NTP), and load balancers.

The NMS may also engage in monitoring and telemetry collection, whereby the NMS monitors the state of the network after configuration to ensure that devices remain healthy and function as expected. Telemetry data may include data relating to device health (e.g., CPU usage, memory utilization, temperature), network traffic statistics (e.g., bandwidth usage, packet drops, error rates), and link status (e.g., up/down state of interfaces, port errors), for instance. As part of network monitoring, the NMS may also perform configuration validation to ensure that the actual configuration state of a network aligns with intended configuration state of the network. If the NMS detects any discrepancies or configuration, the NMS can take action to align the actual configuration state of the network with intended configuration state of the network.

The NMS may also interact with the network by monitoring for events and generating alerts based on pre-defined thresholds or conditions. For example, if a link goes down, traffic exceeds a certain limit, or a device is nearing its resource capacity, the NMS can trigger alerts to network administrators. Such events are alternately referred to herein as "anomalies". The NMS may in some cases automatically perform predefined actions when certain alerts are triggered, such as rerouting traffic or adjusting QoS settings.

### SUMMARY

Particular aspects are set out in the appended independent claims. Various optional embodiments are set out in the dependent claims.

In general, this disclosure describes techniques for analyzing anomalies in a network. In an aspect of the disclosure, the techniques involve identifying associated anomalies of a key anomaly in the network. A network management system can implement intent-based networking (IBN) to manage a network using a network graph that models a configuration and operational state of the network.

In some aspects of the techniques, the network management system identifies multiple anomalies in the network that are deviations from the intent for the network. The anomalies are each associated to one or more nodes of a network graph, e.g., as properties or "tags" of the nodes. These may be stored in a 'key:value' format. The network graph may model the intent for the network. An analysis system, which may be the network management system or another computing system, applies a predefined graph query to the network graph that matches on the nodes having the anomalies, on the relationships among those nodes, and on the anomalies. The predefined graph query is associated with data that indicates which of the anomalies matched by the predefined graph query is the key anomaly. The data may further indicate other anomalies associated with the key anomaly. The key anomaly is an anomaly that is, e.g., a cause of the other anomalies associated with the key anomaly, the anomaly that has the most impact of the anomalies matched by the predefined graph query, or that is otherwise deemed as significant (i.e., "key") by an operator or expert. The analysis system may execute the predefined graph query with respect to the network graph and, upon a match to nodes of the network graph, output an indication that the network is experiencing the key anomaly. The match may be a subgraph of the network graph. The predefined graph query and the data may be generated, stored, and displayed as a knowledge card.

The above techniques may provide one or more technical advantages that have one or more practical applications. For example, identifying a key anomaly and associated anomalies from among a number of anomalies may enable the operator to quickly identify high value areas for investigation into the anomalies. Rather than hundreds or even thousands of anomalies to review and investigate, leading to alert fatigue, the analysis system instead presents the operator with one or more key anomalies that, once investigated and remediated, are likely to also remediate those anomalies associated with the anomalies. This may enable the operator or another system to more quickly resolve issues with the network. The techniques may provide a clear picture of issues and impacts on applications / services running over the network and facilitate distinguishing which anomalies were a side effect of a key anomaly or unrelated to the key anomaly. That is, techniques described herein using knowledge cards may help to improve the technical field of network management. For example, the techniques may help to allow a user using the network management system to more quickly resolve issue(s) within the network. This may include reconfiguring the network to resolve such issue(s).

In some aspects of the techniques, the analysis system maps key anomalies present in the network into issues at the application level. Services executing on compute nodes connected via the network and clients interacting with the services may be impacted by key anomalies. The analysis system stores service impact data that indicates one or more services that may be impacted by a key anomaly. For example, a down interface may prevent access to a service running on a compute node that uses the interface for communication. Upon identifying a key anomaly, the analysis system uses the service impact data to identify one or more services that may be impacted by the key anomaly. The analysis system may output an indication of the one or more services. In some examples, the analysis system extends a visual depiction of at least a portion of the topology of the network to include the service topology, effectively extending the network graph to visually indicate services and/or clients that are affected by a key anomaly. Returning to the above example, service impact data associated with a key anomaly specifies that a down interface of a leaf switch may impact all services running on a compute node connected to the down interface of the leaf switch. The analysis system extends a topology of the network to indicate the services running on the affected compute node and, in some cases, to indicate clients connected to the services. These indications of affected services and clients may be considered synthetic anomalies, in that they are not identified by a network management system using telemetry, configuration, or operational data from the network or compute nodes, but they are instead identified as likely to occur due to a key anomaly, based on the service impact data.

The above techniques may provide one or more technical advantages that have one or more practical applications. For example, the techniques may enable the operator or a system to quickly identify affected services and take action to remediate the affected services. This may include reprovisioning the affected services to another compute node, prioritizing addressing the key anomaly due to the priority of affected services, or other actions. Addressing the key anomaly may include reconfiguring the network. Identifying affected services is based on data obtained from the network, and does not rely on the service providing its own indication of failure. This can, in some cases, provide an earlier indication of a problem as well as clearly identifying the problem as within the network rather than being due to the service itself or the compute node on which the service is executing.

In some aspects of the techniques, the network management system associates operational data to one or more nodes of the network graph. Such operational data can indicate, for instance, down interfaces, hold/cold interfaces, interface flapping, bad optics, lag issues, resource utilization, environmental factors (fan, power, temperature), device traffic, configuration deviations, a number of routes in an Ethernet Virtual Private Network (EVPN), a flood list size for an EVPN, and so forth. As examples, a CPU utilization for leaf switch may be 80%, a link may have a lag of >1ms, or an EVPN flood list may be 25 interfaces. The operational data is associated to one or more nodes of the network graph, e.g., as properties or "tags" of the nodes. An analysis system, which may be the network management system or another computing system, applies a predefined graph query to the network graph that matches on the nodes having properties that satisfy thresholds defined in the graph query, on the relationships among those nodes, and on the properties that satisfy the thresholds. The predefined graph query may be based on a Service Level Agreement (SLA) / Service Level Expectation (SLE) for the network. The predefined graph query is associated with data that the analysis system used to identify and indicate one or more affected nodes of the network. The analysis system may execute the predefined graph query with respect to the network graph and, upon a match to nodes of the network graph, output an indication that one or more affected nodes of the network are experiencing an issue, e.g., low /poor health, or a positive indication that one or more "affected nodes" are meeting the SLAs/SLEs. The techniques can be used to identify problems with service health, link health, system / device health, EVPN fabric health, and so on, or to demonstrate satisfactory operation of the network. The match may be a subgraph of the network graph. The predefined graph query and the data may be generated, stored, and displayed as a knowledge card.

The above techniques may provide one or more technical advantages that have one or more practical applications. For example, the above techniques may enable the operator to quickly identify health issues in the network. This may enable the operator or another system to more quickly resolve issues with the network and ensure compliance with SLAs/SLEs.

In an example, a system comprising: a memory storing a graph query and a network graph for a network, wherein the network graph includes one or more nodes having one or more properties that indicate a plurality of anomalies for the network; and one or more processors coupled to the memory, wherein the memory stores instructions that, when executed, cause the one or more processors to: execute the graph query on the network graph for the network to determine a matching subgraph of the network graph, wherein the graph query matches on the one or more nodes and the one or more properties; and based on the determination of the matching subgraph, output an indication of an association of the plurality of anomalies.

In an example, a method comprises obtaining, by a system, a graph query and a network graph for a network, wherein the network graph includes one or more nodes having one or more properties that indicate a plurality of anomalies for the network; executing, by the system, the graph query on the network graph for the network to determine a matching subgraph of the network graph, wherein the graph query matches on the one or more nodes and the one or more properties; and based on the determination of the matching subgraph, outputting an indication of an association of the plurality of anomalies.

In an example, computer-readable media comprises (e.g. stores and/or conveys) instructions that, when executed, cause processing circuitry to: obtain a graph query and a network graph for a network, wherein the network graph includes one or more nodes having one or more properties that indicate a plurality of anomalies for the network; execute the graph query on the network graph for the network to determine a matching subgraph of the network graph, wherein the graph query matches on the one or more nodes and the one or more properties; and based on the determination of the matching subgraph, output an indication of an association of the plurality of anomalies.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example of a network that is managed using a network management system and analysis system, in accordance with techniques of this disclosure.
FIG. 2 is a block diagram illustrating an analysis system and an example set of components for network management system of FIG. 1, in accordance with techniques of this disclosure.
FIGS. 3A and 3B are conceptual diagrams illustrating example network devices in communication with a network management system, in accordance with techniques of this disclosure.
FIG. 4 is a conceptual diagram showing a network graph for the network of FIG. 1, in accordance with techniques of this disclosure.
FIG. 5 depicts an example user interface displaying a network graph for a network, in accordance with techniques of this disclosure.
FIGS. 6A-6D depict user interfaces generated in accordance with techniques of this disclosure.
FIGS. 7A-7C depict network graphs and graph query subgraphs, in accordance with techniques of this disclosure.
FIG. 8 is an example graph query, in accordance with techniques of this disclosure.
FIG. 9 depicts an example subgraph of a network graph that matches the graph query of FIG. 8, in accordance with techniques of this disclosure.
FIG. 10 lists properties of nodes augmented with anomaly data, in accordance with techniques of this disclosure.
FIG. 11 depicts a user interface generated by an analysis system, in accordance with techniques of this disclosure.
FIG. 12A depicts a user interface generated by an analysis system, in accordance with techniques of this disclosure.
FIG. 12B lists properties of nodes augmented with anomaly data, in accordance with techniques of this disclosure.
FIG. 13A depicts a user interface generated by an analysis system, in accordance with techniques of this disclosure.
FIG. 13B lists properties of nodes augmented with anomaly data, in accordance with techniques of this disclosure.
FIG. 14 is an example system implementing an analysis system and network management system in further detail, in accordance with techniques of this disclosure.
FIG. 15 is an example system implementing an analysis system and network management system in further detail, in accordance with techniques of this disclosure.
FIG. 16 is a flowchart of an example mode of operation by an analysis system, in accordance with techniques of this disclosure.

Like reference characters refer to like elements throughout the text and figures.

### DETAILED DESCRIPTION

Intent-based networking is a software-enabled automation process that uses high levels of intelligence, analytics, and orchestration to improve network operations and uptime. When operators describe the business outcomes they wish to accomplish, the network management system converts those objectives into the configuration necessary to achieve them, without individual tasks having to be coded and executed manually.

For example, consider the need for secure communications between two networks. An intent would broadly state that a secure tunnel is needed between Network A and Network B. An operator would identify which traffic should use the tunnel and describe any other desired general properties of the tunnel. But the operator would not necessarily specify how the tunnel is to be implemented, such as the number of devices to be used, how Border Gateway Protocol (BGP) advertisements should be made, or which specific features and parameters to turn on. Instead, an intent-based networking system may automatically generate a full configuration of all devices based on the service description. The intent-based networking system may then provide ongoing assurance checks between the intended and operational state of the network, using closed-loop validation to continuously verify the correctness of the configuration.

Intent-based networking is a declarative network operation model. It contrasts with traditional imperative networking, which requires network engineers to specify the sequence of actions needed on individual network elements and creates significant potential for error. Traditionally, networking has been driven by manual, command-line interface (CLI)-based operations, basic element management systems (EMSs), or automation scripts. Most network outages result from human errors that occur during these network operations. Intent-based networking (IBN) reduces errors and risk while improving operational efficiencies in a number of ways. For example, IBN validates intent objects before applying them to the network. Intent objects are high-level representations of the desired properties or outcomes to be achieved with the network. Validation is syntactic and includes semantic checks against networkwide policy. IBN facilitates rapid roll-back or roll-forward. Operators simply apply the appropriate versioned intent object to return to a known good state if something goes wrong during a deployment push. IBN limits the impact and scope of failures during new intent rollout through well-defined policies. IBN may enable intent-based fallback. As the system knows the desired outcomes for a specific configuration, it can maintain those outcomes even in the face of outages or device errors by reconfiguring other network elements or using different mechanisms to achieve the same results.

Network orchestration systems can use intent-based network systems for mission-critical and scaled deployments possible. Intent-based networks can dramatically reduce the time to deliver reliable services from days or weeks to minutes and help address operational challenges once the infrastructure has been deployed. Intent-based networking may also involve intent assurance. With intent-based analytics, networks can remain in compliance with the original intent for the network throughout the service lifecycle. Intent-based analytics can provide insights into network services, enabling teams to think about the network as a complete service. Using analytics, intent-based networking may enable faster root-cause analysis (RCA) and identification.

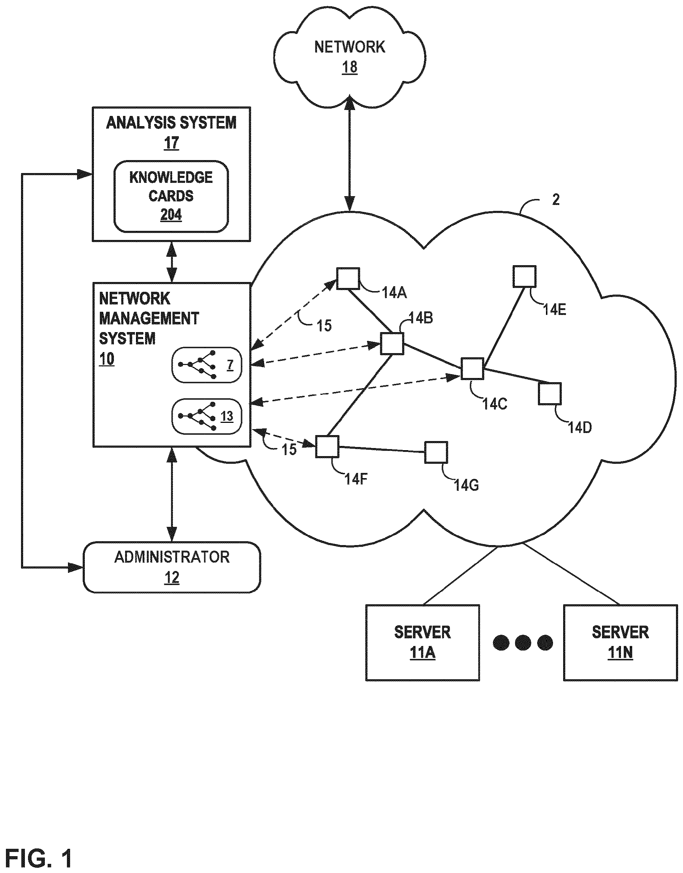

FIG. 1 is a block diagram illustrating an example of a network 2 that is managed using a network management system 10 and analysis system 17, in accordance with techniques of this disclosure. Network management system 10 described herein implements intent-based networking and may implement intent-based analytics.

Network devices 14A-14G (collectively, "network devices 14") of network 2 are interconnected via communication links to form a communication topology in order to exchange resources and information. Network devices 14 may include, for example, routers, switches, gateways, bridges, hubs, access points, servers, firewalls or other intrusion detection systems (IDS) or intrusion prevention systems (IDP), computing devices / hosts / servers / nodes, computing terminals, printers, other network devices, or a combination of such devices. While described in this disclosure as transmitting, conveying, or otherwise supporting packets, network devices within network 2 may transmit data according to any other discrete data unit defined by any other protocol. Communication links interconnecting network devices 14 may be physical links (e.g., fiber, copper, and the like), wireless, or any combination thereof.

Network 2 may represent a data center network that connects physical infrastructure with network devices 14. In general, a data center network is a structured system of networking devices, protocols, and infrastructure designed to support the compute, storage, and communication needs of a data center. Data centers host computing and storage systems that provide applications, data processing, and services for enterprises, cloud providers, and internet-based services. In the example of FIG. 1, physical infrastructure includes servers 11A-11N (collectively, "servers 11"). Servers 11 may include compute servers that host applications and services deployed using, e.g., virtual machines, containers, or other virtual compute instances or workloads. Servers 11 can also include storage servers of one or more storage systems. Servers 11 are connected to network 2 via physical interfaces of network interface cards (NICs), and network 2 interconnects compute servers and storage servers of servers 11 to enable data communications among servers 11 and distributed applications and storage.

In a data center network, network devices 14 may be structured as a data center fabric to interconnect servers 11 within one or more data centers. Switches of network devices 14 can include Top-of-Rack switches, leaf switches, spine switches. The data center network may be built using a multi-tiered architecture to manage the large amount of internal (east-west) and external (north-south) traffic. The multi-tiered architecture may be a leaf-spine or three-tier design, for instance.

Servers 11 execute applications to provide services. Example services can include infrastructure services such as Domain-Name Service (DNS), Dynamic Host Configuration Protocol (DHCP), authentication and directory services, backup and storage management, and load balancing. Other example services can include external or client-directed services provided to tenants or clients; such services can include enterprise applications, web/email hosting, cloud computing services (e.g., compute, storage, containers, application hosting), virtualization services (e.g., virtual machine [VM] hosting), application servers, streaming, collaboration and communication platforms, DevOps, backup and disaster recovery, content delivery networks, and e-commerce and other financial services, for example.

Servers 11 and/or network 2 may implement network virtualization to abstract the physical networking infrastructure and create virtual network environments. Network virtualization allows for better resource allocation, scalability, and automation. For example, network devices 14 and/or servers 11 may be configured to implement virtual network overlays that support features such as virtual switches, virtual firewalls, and virtual routers to interconnect virtual compute instances or other workloads executing on servers 11. Virtualization reduces reliance on physical hardware, allowing for greater agility in managing workloads and traffic flows. Unless described in context, network 2 should be considered as including servers 11.

Network 2 is shown coupled to network 18 via one or more communication links. Network 18 may provide access to other devices accessing resources of servers 11. Network 18 may be a public network, such as the internet, a private network or VPN, or other network. Network devices 14 may communicate with one another, servers 11, and network 18 using a variety of protocols at different layers of the Open Systems Interconnect model, such as Border Gateway Protocol (BGP) or other routing protocols, Virtual Extensible LAN (VXLAN), Ethernet VPN or BGP-EVPN, layer 2 protocols, and so forth.

Network management system 10 is communicatively coupled to network devices 14 via network 2. Network management system 10 may be coupled either directly or indirectly to the various network devices 14. Once network devices 14 are deployed and activated, administrator 12 uses network management system 10 to manage and monitor the network devices, e.g., using device management protocols. Administrator 12 may be a human operator or a computing system.

Network management system 10, also referred to herein as a network management system (NMS), and network devices 14 can be centrally maintained by an administrative group, such as an IT group of an enterprise or provider. Administrator 12 interacts with network management system 10 to remotely configure, monitor, and analyze network devices 14. For example, administrator 12 may receive alerts from network management system 10 regarding any of network devices 14. The alerts may include alerts regarding anomalous operation of one or more of network devices 14 that is detected using the techniques described herein. Administrator 12 may also view configuration data of network devices 14, modify the configurations data of network devices 14, add new network devices to network 2, remove existing network devices from network 2, or otherwise manipulate the network 2 and network devices therein. Although described with respect to a network, the techniques of this disclosure are applicable to other network types, public and private, including LANs, VLANs, VPNs, and the like.

Administrator 12 can use network management system 10 to configure network devices 14 to specify certain operational characteristics that further the objectives of administrator 12. For example, administrator 12 may specify for a network device 14 a particular operational policy regarding security, device accessibility, traffic engineering, quality of service (QoS), network address translation (NAT), packet filtering, packet forwarding, rate limiting, or other policies. Network management system 10 uses one or more network management and automation protocols designed for setting configuration data within network devices 14 and obtaining telemetry data indicative of the operational states of network devices. Such protocols may include Simple Network Management Protocol (SNMP), Network Configuration Protocol (NETCONF) or RESTCONF, OpenFlow / P4 or other protocols used in software-defined networking (SDN), telemetry protocols such as gRPC, and so forth. Network management system 10 may employ one or more automation frameworks that interact with network devices 14 via Secure Shell (SSH) or Representational State Transfer (REST) APIs to automate the deployment and configuration of network 2. Network management system 10 and network devices may communicate using communications 15 in accordance with protocols described above.

A user configuration of devices may be referred to as an "intent." An intent-based networking system may help to allow administrators to describe the intended network/compute/storage state. In some aspects, user intents can be categorized as business policies or stateless intents. Business policies, or stateful intents, may be resolved based on the current state of a network. Stateless intents may be fully declarative ways of describing an intended network/compute/storage state, without concern for a current network state.

In some aspects, stateful intents may include intents with respect to anomaly detection within the network. Such intents may be referred to as anomaly detection intents. As an example, an administrator may express an intent that the system reports an anomaly with respect to a network device if an operating characteristic of the network device varies from a baseline value established as described herein by more than a user-specified threshold. The intent may be applied to a single network device or groups of network devices. Examples of such groups include network devices of the same make and model, network devices from the same vendor, network device in the same area, etc.

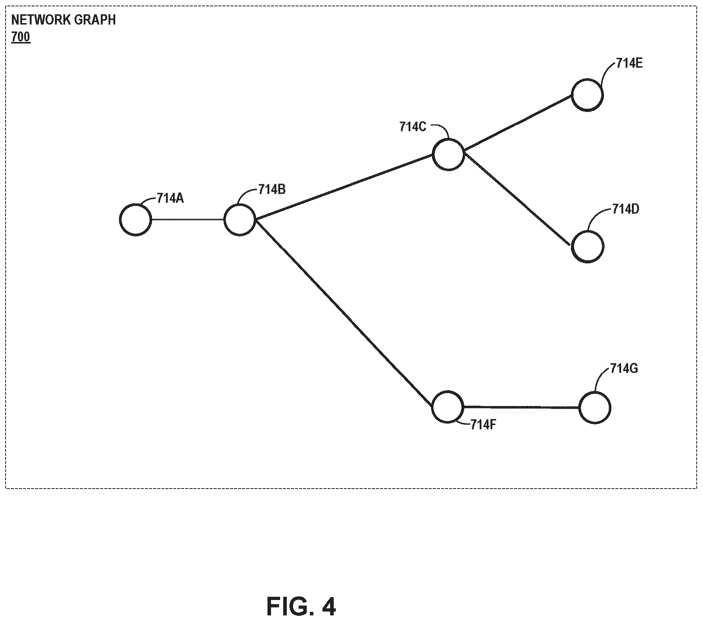

Network management system 10 may implement intent-based networking to automate and manage network 2 using an intent-based approach in which administrator 12 defines how the network is to be configured and operate (intent 7), and network management system 10 ensures that the network configuration and operation match intent 7. Network management system 10 models a representation of network 2 as network graph 13 in which network devices 2, links, interfaces, and other network components are nodes, while the relationships or connections between the nodes are edges. Edges may thus represent physical cabling, logical links, protocols, or data flows, for example. Network graph 13 is a graph-based data model that enables users to visualize and manage the entire network holistically. Network graph 700 of FIG. 4 depicts an example of a network graph and is described in further detail below. Network graph 13 may be stored using a graph database (graphDB), which can be queried using a graph query language.

Using network graph 13 to model network 2, network management system 10 enables visually representing the state of network 2, providing insight into how devices and services are connected. The structure allows for a comprehensive view of the network as a whole, visualizing the relationships between devices, paths of data flows, and dependencies between different elements of the network 2.

Administrator 12 using network management system 10 specifies a high-level intent 7 for network 2. Intent 7 for network 2 is high-level configuration data that describes and/or defines the desired outcomes for the architecture, configuration, and operation of network 2 rather than specific configuration details. For example, instead of configuring individual network devices, administrator 12 can specify isolation of specific workloads or certain traffic should be load-balanced. Intent 7 for network 2 may be specified by administrator 12 using network management system 10 in a variety of ways. For example, intent 7 may be expressed may be expressed as structured input parameters, e.g., according to YANG, JavaScript Object Notation (JSON), or other data modeling language. Network management system 10 may provide Application Programming Interfaces (APIs), CLIs, or other means by which administrator 12 may specify, interact with (e.g., query), and update the intent.

In some examples, intent 7 is specified as a template or model (also referred to as a "blueprint"). The intent may include a physical topology for the layout of network devices 14, servers 11, and links among these devices; a logical topology defining how the network is logically segmented (e.g., subnets, VLANs, and routing policies) and how traffic is logically routed among network devices 14 and servers 11; intent-based policies that specify, e.g., requirements for security, performance, or compliance; and/or roles for the network devices 14 or other network 2 components (e.g., "spine switch", "leaf switch", "link") as well as relationships among network devices 14 or other network 2 components. Intent 7 may be a network graph (an "intent network graph"). Intent 7 may be a directed acyclical graph. Intent 7 may be queryable using a graph query language.

Network management system 10 may use intent 7 to generate a corresponding network graph 13 that is to represent the implementation of intent 7. Whereas intent 7 is a high-level specification, network graph 13 captures the operational details of network 2, such as device configurations, link status, and data flows. Network management system 10 translates the high-level specification to low-level configuration data for network devices 14, for instance, and configures the network 2 with this low-level configuration data in a manner that is therefore based on intent 7, ensuring that the actual network topology and configuration aligns with what was specified. That is, network management system 10 using network graph 13 ensures that the actual state of network 2 aligns with the intended state specified by intent 7. Network management system 10 checks and verifies that all devices are configured and operating in accordance with the defined intent. Changes in the network determined from configuration or telemetry data obtained from network 2 are reflected in network graph 13 in real time, and network management system 10 can respond automatically to deviations by making corrections to align network 2 to intent 7 or by notifying administrator 12.

Network management system 10 using network graph 13 may perform closed-loop automation in which network 2 is continuously monitored and adjusted to meet the intended state without manual intervention. By network graph 13, network management system 10 may continuously validate network performance, reduce misconfigurations, and ensure compliance with design policies.

Network graph 13 may be queried by administrator 12, e.g. using network management system 10 or another system. Network graph 13 is continuously updated to reflect the real-time state of the network, allowing administrator 12 to execute graph queries that give insights into the state and relationships of network devices 14. Graph queries are based on relationships between nodes, such as finding the path between two devices or determining how a service flows through the network. Graph queries can thus help administrator 12 perform a variety of tasks, such as troubleshooting, monitoring, and configuration changes. For example, a graph query can enable topology discovery by traversing network graph 13 to retrieve the entire network topology, including all devices and their interconnections. This can provide visibility into how all switches, routers, and links are connected. A graph query may be used to find all devices and links between server 11A and network device 14C. A graph query can retrieve information indicating the status of all or a subset of network devices and links in network graph 13. Other graph queries may include those relating to bandwidth and resource utilization, redundancy and resilience, or policy compliance. Graph queries may be expressed using GraphQL, Cypher, Gremlin, SPARQL, Property Graph Query Language (PGQL), or other supported language(s) to extract specific data or insights from network graph 13. Graph queries may be run via REST API, internally, or via another type of interface.

Network management system 10 determines anomalies in network 2. In general, an anomaly is a deviation in network 2 from intent 7 (i.e., intended network configuration or operational state). Network management system 10 may determine anomalies based on configuration data or telemetry data obtained from devices of network 2 or based on probe data generated from probes to network devices 14 or servers 11, for example.

Telemetry data can be operating temperature data, voltage data, current draw data, or other operating characteristics regarding the operation of network devices 14. Other characteristics that may be collected are transmitted/received bytes/packets which indicates traffic volume, error packet count, e.g., cyclic redundancy check (CRC), frame check sequence (FCS), etc., which may indicate deteriorating operating state. Network management system 10 may analyze and use the telemetry data in various ways. During an initial baseline establishment period, network management system 10 may collect and store the telemetry data. In some aspects, the baseline establishment period may be thirty days. At the end of the baseline establishment period, controller device may determine baseline values for various parameters in the telemetry data such as a baseline temperature, baseline voltage, baseline current draw, etc. Baseline values may be established for individual network devices or groups of network devices. For example, baseline values may be established for network devices from the same manufacturer, network devices that are the same make and/or model, network devices that are in the same general area of a data center, network devices that are configured with the same software (operating system, applications, etc.) or other groupings. After baseline values for the various parameters have been established, network management system 10 may continue to receive telemetry data from network devices 14. Network management system 10 can compare the currently received telemetry data with the baseline data, and using threshold values determined according to anomaly detection intent provided by administrator 12, determine if a network device of network devices 14 is operating anomalously and in this way determine one or more anomalies for network 2.

Anomalies may include network device 14 misconfigurations, cabling issues, policy violations, unexpected traffic patterns or other load, or hardware failures, for instance. A list of example anomalies, affected nodes, and their descriptions is as follows, but additional categories and types of anomalies are contemplated.

| Anomaly | Node(s) | Schema |
|---|---|---|
| BGP | link node across neighbor interfaces identified through src/dst IP or system node with counter | Anomaly_type, system _id; ip, asn, and vrf name for src and dst; addr_family, expected vs actual session state (enum values) |
| Cabling | interface where the neighbor interface mismatch occurred + system id | Anomaly_type, system _id, device_identifier, expected vs actual neighbor interface (name) |
| | | Miscable |
| | | Link node is the right place to add this anomaly (a) |
| | | System ID --> System node |
| | | Map between id to node |
| | | **Find** Interface name --> Find the interface node |
| | | Then interface node --> associated link node |
| Interface | interface where state mismatch occurred + system id | Anomaly_type, system_id, device_identifier, expected vs actual interface state |
| | | Interface node (a) |
| Hostname | system node | Anomaly_type, system _id, device_identifier, expected vs actual fully qualified domain name (FQDN) |
| | | System node |
| Lag | Redundancy group/System node | Anomaly_type, system_id, device_identifier, interfaces_up, intf_up_count (expected vs actual) |
| | | Redundancy group (a) |
| | | System + mlag --> interfaces -> port channel node |
| Liveness | system or device node | Anomaly_type, system _id, device_identifier, expected vs actual aos agent names running on device |
| | | System node (a) |
| Route | interface node where next hop mismatch occurred + system id | Anomaly_type, system_id, device_identifier, destination subnet of route, expected vs actual route destination status (enum values) |
| | | Static routes, dynamic routes (auto generation from configuration underlay network), multiple type of routes Match based on next hop |
| Config | device | Anomaly_type, system_id, device_identifier, expected vs actual device config (string) |
| | | System node (a) |
| Deployment | system node | Anomaly_type, system _id, device_identifier, expected vs actual deployment status (success or failed). |
| | | System node (a) |
| Blueprint (BP) Rendering | system node | anomaly_type, bp_id, list of systems with failed rendering |
| | | Blueprint (a) |
| Streaming | | Anomaly_type, endpoint_type, hostname, port, protocol, expected vs actual status |
| | | Blueprint (a) |
| Mac | interface name + system id | Anomaly_type, system_id, device_identifier, expected max_interval vs actual int_name, move_count, and move_interval |
| | | Vn endpoint (a) |
| | | Static vlan, Vlan, Footprint, Vn endpoint (vlan configured on the ports) Corresponding |
| | | Interface of the system Vn endpoint |
| | | System -> interface -> link -> interface of the otherside -> vn endpoint --> vn instance-> find the vland id |
| Mlag | Redundancy group/System node | Anomaly_type, system _id, device_identifier, int_name, intf_state, domain_state (expected vs actual) |
| | | Port channel (a) |
| | | Check the lag anomaly, how to get to it |
| Probe | Tbd: need k/v pairs | Anomaly_type, probe_id, stage_name, item_id, properties, expected vs actual anomalous range (min to max) |
| Config Mismatch | System node | Bp_id, collector_name, expected vs actual config |

### Probe Anomalies

| **Anomaly type** | **Nodes** | **Comments** | | |
|---|---|---|---|---|
| Hot/cold interface warning | System, interface | There are three hot/cold predefined probes: | | |
| | | | • fabric_hotcold_ifcounter | |
| | | | • spine_superspine_hotcold_ifcounter | |
| | | | • specific_hotcold_ifcounter | |
| | | There are three stages in the **fabric_hotcold_ifcounter** probe which raise anomalies: | | |
| | | | • hot_leaf_int | |
| | | | • cold_leaf_int | |
| | | | • device_hot_anomalous | |
| | | | • device_cold_anomalous | |
| | | For anomalies raised in **hot_leaf_int** and **cold_leaf_int** stages, the following properties can be used to match an anomaly to graph nodes (anomaly identity property => graph node type and property): | | |
| | | | | • system _id => system.system_id |
| | | | | • interface => interface.if_name |
| | | The following graph query can be used to select a system and an interface by properties mentioned above found in an anomaly: | | |
| | | 'node("system", system_id=system_id).out("hosted_interface s").node("interface", if_name=interface_name)' | | |
| | | For anomalies raised in **device_host_anomalous** and **device_cold_anomalous** the matching should be the following: | | |
| | | | • system_id => system.system_id | |
| Critical services alerts | System, interface | There are two predefined probes: | | |
| | | | • "server_sla_a" | |
| | | | • "server_sla_b" | |
| | | There are three stages in the "server_sla_a" probe which raise anomalies in the probe: | | |
| | | | • "1-day bandwidth alerts" | |
| | | | • "1-hour bandwidth alerts" | |
| | | | • "30-days bandwidth alerts" | |
| | | For anomalies raised in them the following matching should be used: | | |
| | | | • system_id => system.system_id | |
| | | | • Interface => interface.if_name | |
| | | There is only one stage in the "server_sla_b" probe which raises alerts: | | |
| | | | • "Alerting and 7-days trending" | |
| | | Alerts in this stage are associated to systems and has only the following key: | | |
| | | | • "system_id" => "system.system_id" | |
| Spine Fault Tolerance | BP meta node Or all spines | In short: anomalies raised in this probe can't be associated with graph nodes as they indicate presence of problem in an entire blueprint. | | |
| | | This probe raises a single anomaly in the "Persistent fault intolerant traffic" stage which indicates whether a total spine-to-leaf traffic exceeds a bandwidth calculated like for bandwidth of number of spines minus number of spines which failure can be tolerated. | | |
| 802.1X issues | interface | This probe raises anomalies in the "Unexpected 802.1x authentication status" stage, the matching should be the following: | | |
| | | | • System_id = system.system_id | |
| | | | • Interface => interface.if_name | |
| Interface flapping | System, interface | There are three probes: | | |
| | | | • Fabric_interface_flapping | |
| | | | • Spine_superspine_interface_flapping | |
| | | | • Specific_interface_flapping | |
| | | The fabric_interface_flapping probe raises anomalies in the following stage: | | |
| | | | • If_status_flapping | |
| | | | • System_flapping | |
| | | Anomalies raised in the if_status_flapping stage can be associated with the following nodes according to the following matching: | | |
| | | | • System_id => system.system_id | |
| | | | • Interface => interface.if_name | |
| | | Anomalies raised in the system_flapping stage can be associated with the following nodes according to the following mapping: | | |
| | | | • System_id => system.system_id | |
| BGP Monitoring | System | The "Sustained BGP Session Flapping" stage raises anomalies which can be directly mapped by and to: | | |
| | | | • System_id => system.system_id | |
| | | These anomalies as built-in BGP anomalies have the following identity attributes: | | |
| | | | • Af | |
| | | | • Dest_asn | |
| | | | • Dest_ip | |
| | | | • Source_asn | |
| | | | • Source_ip | |
| | | | • Vrf_name | |
| | | And can be associated to graph paths which represent BGP sessions in the similar way as BGP built-in anomalies. | | |
| EVPN Host Flapping | System | The "Sustained EVPN Host Flapping" stage raises anomalies which can be mapped by and to: | | |
| | | | • System_id => system.system_id | |
| Resource health issues | System | | | |
| Device Environmental Checks | System | The following stages of this probe raises anomalies: | | |
| | | | • Airflow Alarm Anomalies | |
| | | | • Fan State Anomaly | |
| | | | • Operational Fan Tray Count Anomaly | |
| | | | • Operational Power Supply Count Anomaly | |
| | | | • Power Supply Fan State Anomaly | |
| | | | • Power Supply State Anomaly | |
| | | | • Power Supply Temperature Alarm | |
| | | | • Temperature Alarm | |
| | | All these stages raise anomalies which can be associated to: | | |
| | | | • System_id => system.system_id | |
| Type -3 Route Validation | vn_instance | The "Sustained Anomalies" stage raises anomalies which can be associated with: | | |
| | | | • "system_id" => "system.system_id" | |
| | | | • "vni" => "virtual_network.vn_id" | |
| | | The following graph query can be used to find a "vn_instance" node by "system _id" and "vni": | | |
| | | 'node("system", system_id=system_id).out("hosted_vn_insta nces").node("vn_instance", | | |
| | | name="vn_instance").out("instantiates").nod e("virtual_network", vn_id=vni)' | | |
| Type-5 Route Validation | sz_instance | The "Sustained Anomalies" stage raises anomalies which can be associated with: | | |
| | | | • System_id => system.system_id | |
| | | | • Rt => security_zone.vni_id | |
| | | The following graph query can be used to select "sz_instance" node by "system _id" and "rt": | | |
| | | 'node("system", system_id=system_id).out("hosted_sz _instan ces").node("sz_instance", name="sz_instance").in_("instantiated by"). node("security_zone", vni_id=rt)' | | |
| ECMP Imbalance | System | There are three probes which detect Equal Cost Multipath (ECMP) imbalance issues: | | |
| | | | • Fabric_ecmp_imbalance | |
| | | | • Spine_superspine_ecmp_imbalance | |
| | | | • External_ecpm_imbalance | |
| | | The fabric_ecmp_imbalance probe has the following stages which raise anomalies: | | |
| | | | • System_imbalance | |
| | | | • imbalanced_system_count_out_of_ra nge | |
| | | Anomalies raised in system_imbalance can be associated with system nodes by: | | |
| | | | • System_id => system.system_id | |
| | | Anomalies raised in the imbalanced_system_count_out_of_range stage doesn't have properties by which they could be directly associated to concrete | | |
| | | nodes but locally they can be associated to all all leaf system nodes and to all interface nodes on leafs facing leafs. | | |
| | | The spine_superspine_ecmp_imbalance probe raises anomalies in the following stages: | | |
| | | | • System_tx_imbalance | |
| | | | • imbalanced_system_count_out_of_ra nge | |
| | | The situation is similar to the previous probe for the first stage. As for the second stage an anomaly can be associated to all spine system nodes and to all interfaces on spines facing superspines. | | |
| | | The exernal_ecmp_imbalance probe raises anomalies in the following stages: | | |
| | | | • sustained_ecmp_imbalance | |
| | | | • live_system_imbalance_count | |
| | | The situation is similar to the other two probes for the first stage. As for the second stage, an anomaly raised can be associated to all external facing leafs and their external facing interfaces. | | |
| Device telemetry health | System | Probe name: "device_telemetry_health" | | |
| | | The probe raises anomalies in the following stages: | | |
| | | | • Degraded Wait Time | |
| | | | • Service Enablement Failures | |
| | | | • Sustained Execution Failures | |
| | | | • Sustained Execution Timeouts | |
| | | | • Sustained Execution Underruns | |
| | | | • Check gRPC Connection Resets | |
| | | | • Check gRPC Initial Sync Timeouts | |
| | | | • Check gRPC Periodic Response Timeouts | |
| | | | • Check gRPC Response Processing Failures | |
| | | | • Check gRPC Sequence Number Overruns | |
| | | | • Check gRPC Server Reset Count | |
| | | All of the stages above raise anomalies which can be associated with system graph nodes by: | | |
| | | | • System_id => system.system_id | |
| Multi-chassis Link Aggregation (MLAG) imbalance | Redundancy group, Interface, System | The probe raises anomalies in the following stages: | | |
| | | | • live_mlag_imbalance | |
| | | | • live_port_channel_imbalance | |
| | | | • mlag_port_channel_imbalance_out_o f_range | |
| | | Anomalies raised in live_mlag_imbalance can be associated with the following nodes: | | |
| | | | • Rack => redundancy_group.label | |
| | | | • Remote_system => system.label | |
| | | Anomalies raised in live_port_channel_imbalance: | | |
| | | | • Rack => redundancy_group.label | |
| | | | • Mlag_id => interface.mlag_id | |
| | | | • Leaf => system.label | |
| | | Anomalies raised in mlag_port_channel_imbalance_out_of_range : | | |
| | | | • Rack => redundancy_group.label | |
| | | | • Mlag_id => interface.mlag_id | |
| LAG Imbalance | System, Port Channel | The probe raises anomalies in the following stage: | | |
| | | | • lag_imbalance_range | |
| | | Anomalies can be associated with: | | |
| | | | • System_id => system.system_id | |
| | | | • Port_channel_id => port_channel.port_channel_id | |

Because network management system 10 continually updates network graph 13 to reflect the actual, real-time state of network 2, network management system 10 may determine anomalies by comparing network graph 13 to intent 7 for network 2. Any deviation between network graph 13 and intent 7 represents an anomaly.

When an anomaly is detected, network management system 10 associates the anomaly to specific node(s), edge(s), and/or one or more properties within network graph 13. For example, if network device 14B is down or misconfigured, this anomaly will be linked to the graph node in network graph 13 representing network device 14B. As another example, if there is a link and/or cabling-related anomaly, network management system 10 will associate the anomaly with the edge connecting two nodes. Network management system 10 may output, for display, a user interface depicting network graph 13 and visually indicating anomalies at the associated node(s) or edge(s).

Network management system 10 may use graph queries to detect, analyze, and/or report anomalies. Such graph queries may traverse the graph to look for deviations between the actual state of network 2 and intent 7. Queries may be written by administrator 12 or a network management system 10 vendor, for instance, and can be designed to check the status and/or configurations of network devices 14 and other components of network 2, find missing or misconfigured paths (e.g., an interface not assigned the correct VLAN), or analyze dependencies and their impact (e.g., how the failure of one device might affect the rest of the network), among other purposes.

In accordance with techniques of this disclosure, network management system 10 identifies multiple anomalies in network 2 that are deviations from the intent for network 2. The anomalies are each associated to one or more nodes of a network graph, e.g., as properties or "tags" of the nodes. The network graph augmented with anomaly data may be a modified intent 7 or of network graph 13. The anomaly data identifies the anomalies. For example, the anomaly data may indicate a link down, wrong Link Layer Discovery Protocol (LLDP) neighbors, BGP down, LLDP missing, a cabling anomaly, BGP mismatch, high resource utilization, and so forth. In some cases, analysis system 17, or simply "system" 17, obtains the intent in a structured but non-graph form from network management system 10 and processes the intent to generate a queryable intent network graph. Analysis system 17 is a computing system and may be incorporated within network management system or be implemented and deployed to another computing system. Analysis system 17 applies a predefined graph query to the augmented network graph that matches on the nodes having the anomalies, on the relationships among those nodes, and on the anomalies themselves. The predefined graph query is associated with data that indicates which of the anomalies matched by the predefined graph query is the key anomaly. The data may further indicate other anomalies associated with the key anomaly. The key anomaly is an anomaly that is, e.g., a cause of the other anomalies associated with the key anomaly, the anomaly that has the most impact of the anomalies matched by the predefined graph query, or that is otherwise deemed as significant (i.e., "key") by an operator or expert. The analysis system may execute the predefined graph query with respect to network graph 13 and, upon a match to nodes of network graph 13, output an indication that network 2 is experiencing the key anomaly. The match may be a subgraph of network graph 13. The predefined graph query and the data may be generated, stored, and displayed as a knowledge card.

The graph query may be configured to match particular nodes of network graph 13 by node identifier. The graph query may also, or alternatively, be configured to match types of nodes of network graph 13 by type (e.g., "system", "leaf", "spine"). This latter case may be effectively a template that may match many different subgraphs of network graph 13, should such subgraphs experience the anomalies also matching the graph query. For example, a network many have many leaf-spine pairings/linkages. A graph query that matches type leaf out to type spine will match these pairings.

In some aspects of the techniques, analysis system 17 may map key anomalies present in network 2 into issues at the application level. Services executing on servers 11 (also referred to as "compute nodes") connected via network 2 and clients interacting with the services may be impacted by key anomalies. Analysis system 17 may store service impact data that indicates one or more services that may be impacted by a key anomaly. For example, a down interface may prevent access to a service running on a compute node that uses the interface for communication. Upon identifying a key anomaly, analysis system 17 uses the service impact data to identify one or more services that may be impacted by the key anomaly. Analysis system 17 may output an indication of the one or more services. In some examples, analysis system 17 extends a visual depiction of at least a portion of the topology of the network to include the service topology, effectively extending network graph 13 to visually indicate services and/or clients that are affected by a key anomaly. Returning to the above example, service impact data associated with a key anomaly specifies that a down interface of a leaf switch may impact all services running on a compute node connected to the down interface of the leaf switch. Analysis system 17 may extend a topology of the network to indicate the services running on the affected compute node and, in some cases, to indicate clients connected to the services. These indications of affected services and clients may be considered synthetic anomalies, in that they are not identified by network management system 10 using telemetry, configuration, or operational data from the network or compute nodes, but they are instead identified as likely to occur due to a key anomaly, based on the service impact data.

In some aspects of the techniques, network management system 10 associates operational data to one or more nodes of a network graph representing an intent, e.g., intent 7. Such operational data can indicate, for instance, down interfaces, hold/cold interfaces, interface flapping, bad optics, lag issues, resource utilization, environmental factors (fan, power, temperature), device traffic, configuration deviations, a number of routes in an EVPN, a flood list size for an EVPN, and so forth. As examples, a CPU utilization for leaf switch may be 80%, a link may have a lag of >1ms, or an EVPN flood list may be 25 interfaces. The operational data is associated to one or more nodes of the network graph, e.g., as properties or "tags" of the nodes. Analysis system 17 applies a predefined graph query to the network graph that matches on the nodes having properties that satisfy thresholds defined in the graph query, on the relationships among those nodes, and on the properties that satisfy the thresholds. The predefined graph query may be based on a Service Level Agreement (SLA) / Service Level Expectation (SLE) for the network. The predefined graph query is associated with data that analysis system 17 used to identify and indicate one or more affected nodes of the network. Analysis system 17 may execute the predefined graph query with respect to the network graph and, upon a match to nodes of the network graph, output an indication that one or more affected nodes of the network are experiencing an issue, e.g., low / poor health, or a positive indication that one or more "affected nodes" are meeting the SLAs/SLEs. The match may be a subgraph of a network graph representing an intent.

In the above techniques, the predefined graph query and the data may be generated, stored, and displayed as one of knowledge cards 204.

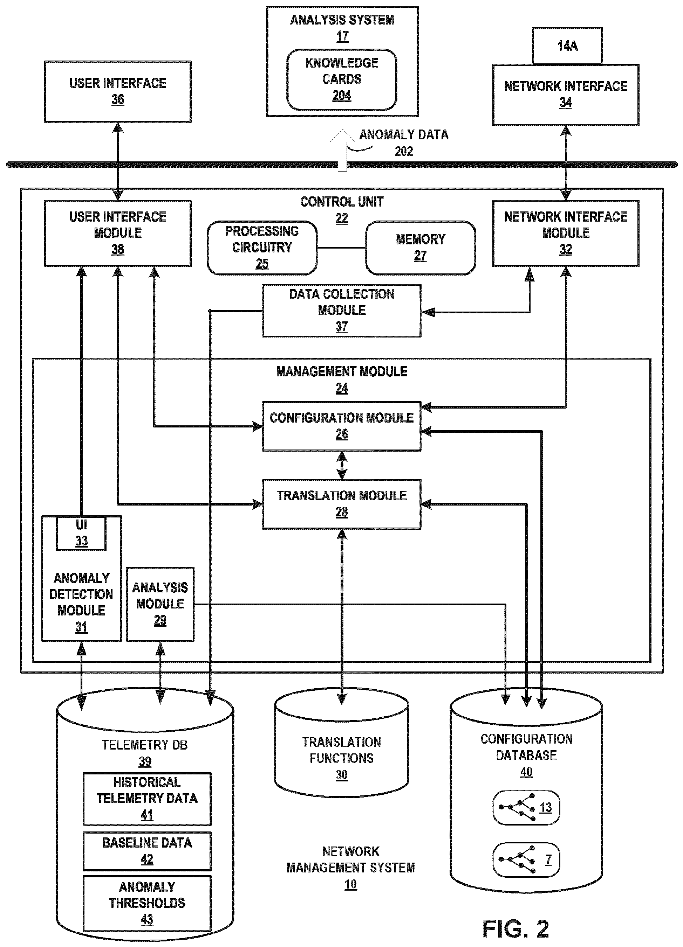

Analysis system 17, network management system 10, and/or administrator 12 may operate to address one or more anomalies based on a determination of a matching subgraph that indicates a plurality of the anomalies are associated, and/or based on identifying the key anomaly. For example, analysis system 17 may send an indication of a key anomaly and/or of an association of a plurality of anomalies to network management system 10 to cause network management system 10 to perform one or more actions to address at least one of the plurality of anomalies. In some cases, the actions are specified by an action card as discussed below with respect to FIG. 2. In some cases, analysis system 17 may automatically address at least one of the plurality of anomalies directly. In some cases, an operator (e.g., administrator 12) makes a physical change (e.g., recabling), a configuration change, or other change to network 2 to address at least one of the plurality of anomalies. These operations and changes may be performed automatically in some cases by analysis system 17 and/or network management system 10, or in response to user input from administrator 12.

FIG. 2 is a block diagram illustrating analysis system 17 and an example set of components for network management system 10 of FIG. 1, in accordance with techniques of this disclosure.

Network management system 10 and analysis system 17 may include processing circuitry 25, memory 27, one or more input devices, one or more communication units, and one or more output devices. (Processing circuitry 25 and memory 27 are shown only for network management system 10 in FIG. 2, but analysis system 17 may in some implementations include separate instances of processing circuitry 25 and memory 27.) In some examples, the processing circuitry 25 includes one or more of a microprocessor, a controller, a digital signal processor (DSP), an application specific integrated circuit (ASIC), a field-programmable gate array (FPGA), or equivalent discrete or integrated logic circuitry, or other types of processing circuitry 25. Network management system 10 analysis system 17 may use the processing circuitry 25 to perform operations in accordance with one or more aspects of the present disclosure using software, hardware, firmware, or a mixture of hardware, software, and firmware residing in and/or executing the network management system 10 and analysis system 17, and may be distributed among one or more devices. The one or more storage devices of memory 27 may be distributed among one or more devices. Processing circuitry 25 and memory 27 may provide an operating environment or platform for one or more modules or units, which may be implemented as software, but may in some examples include any combination of hardware, firmware, and software. Processing circuitry 25 may execute instructions and the one or more storage devices, e.g., memory 27, may store instructions and/or data of one or more modules or units. The combination of the processing circuitry 25 and memory 27 may retrieve, store, and/or execute the instructions and/or data of one or more applications, modules, units, or software. Processing circuitry 25 and/or memory 27 may also be operably coupled to one or more other software and/or hardware components, including, but not limited to, one or more of the components illustrated in FIG. 2.

In another example, network management system 10 and analysis system 17 are implemented on any suitable computing system having one or more computing devices, such as desktop computers, laptop computers, gaming consoles, smart televisions, handheld devices, tablets, mobile telephones, smartphones, etc. In some examples, at least a portion of network management system is distributed across a cloud computing system, a data center, or across a network, such as the Internet, another public or private communications network, for instance, broadband, cellular, Wi-Fi, and/or other types of communication networks, for transmitting data between computing systems, servers, and computing devices.

In some examples, network management system 10 and analysis system 17 are connected by and communicate via a network. In some examples, analysis system 17 is implemented as one or more modules of units of network management system 10.

In this example, network management system 10 includes control unit 22, network interface 34, and user interface 36. Network interface 34 represents an example interface that can communicatively couple network management system 10 to an external device, e.g., one of network devices 14 of FIG. 1. (Only network device 14A is shown in FIG. 2.) Network interface 34 may represent a wireless and/or wired interface, e.g., an Ethernet interface or a wireless radio configured to communicate according to a wireless standard, such as one or more of the IEEE 802.11 wireless networking protocols (such as 802.11 a/b/g/n or other such wireless protocols). Network management system 10 may include multiple network interfaces in various examples, although only one network interface is illustrated for purposes of example.

Control unit 22 represents any combination of hardware, software, and/or firmware for implementing the functionality attributed to control unit 22 and its constituent modules and elements. When control unit 22 includes software or firmware, control unit 22 further includes any necessary hardware for storing and executing the software or firmware, such as one or more processors or processing units. In general, a processing unit may include processing circuitry, one or more microprocessors, digital signal processors (DSPs), application specific integrated circuits (ASICs), field programmable gate arrays (FPGAs), or any other equivalent integrated or discrete logic circuitry, as well as any combinations of such components. Furthermore, a processing unit is generally implemented using fixed and/or programmable logic circuitry.

User interface 36 represents one or more interfaces by which a user, such as administrator 12 (FIG. 1) interacts with network management system 10, e.g., to provide input and receive output. For example, user interface 36 may represent one or more of a monitor, keyboard, mouse, touchscreen, touchpad, trackpad, speakers, camera, microphone, or the like. Furthermore, although in this example network management system 10 includes a user interface, it should be understood that administrator 12 need not directly interact with network management system 10, but instead may access network management system 10 remotely, e.g., via network interface 34.

In this example, control unit 22 includes user interface module 38, network interface module 32, data collection module 37, and management module 24. Control unit 22 executes user interface module 38 to receive input from and/or provide output to user interface 36. Control unit 22 also executes network interface module 32 to send and receive data (e.g., packets) via network interface 34. User interface module 38, network interface module 32, data collection module 37 and management module 24 may again be implemented as respective hardware units, or in software or firmware, or a combination thereof.

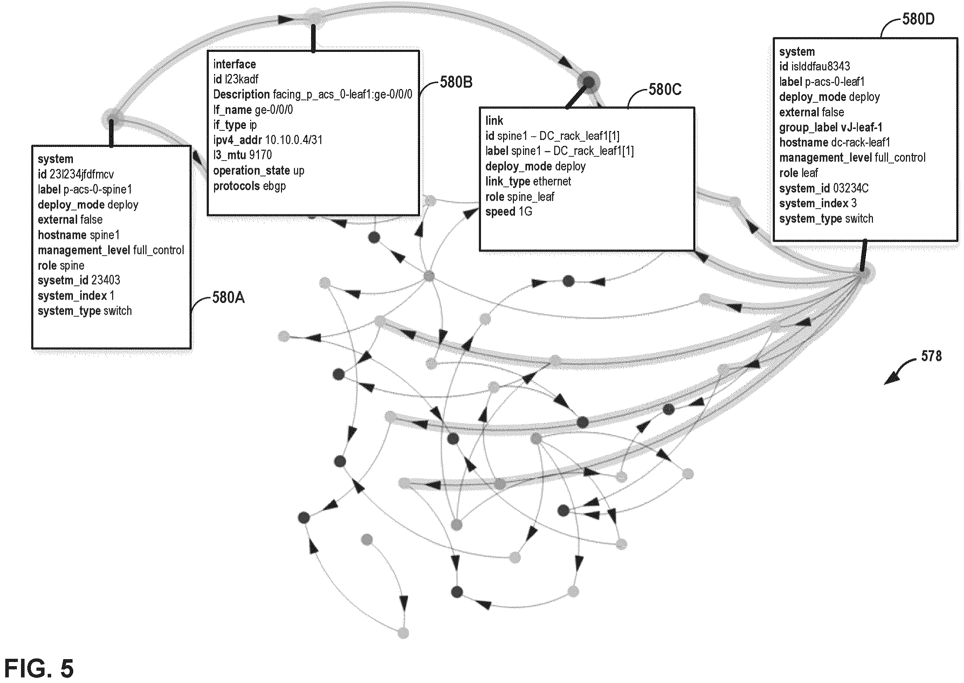

Example user interfaces generated and output by user interface module 38 or a similar user interface module of analysis system 17 are depicted in FIGS. 5, 6A-6D, 11, 12A, and 13A.

Control unit 22 can execute data collection module 37 to obtain telemetry data from network devices, e.g., network devices 14 (FIG. 1). Data collection module 37 may store the telemetry data in telemetry database (DB) 39 as a time series of telemetry data. Data collection module 37 can obtain telemetry data from network devices using a "push" model or a "pull" model. In the push model, a network device (e.g., an agent on a network device), is configured to periodically send telemetry data to data collection module 37. In the pull model, data collection module 37 periodically requests that the network device (e.g., the agent on the network device) provide the telemetry data to data collection module 37. The service interval can be configurable depending on what kind of telemetry data is being collected. As an example, data may be collected every five seconds for optical transceivers. Data collection module 37 may store telemetry data obtained during the baseline establishment period as historical telemetry data 41. In addition to storing the telemetry data, data collection module 37 may store a timestamp in association with the telemetry data to indicate when the telemetry data was collected.

Control unit 22 executes management module 24 to manage various network devices, e.g., network devices 14 of FIG. 1. Management includes, for example, configuring and analyzing the network devices according to instructions received from a user (e.g., administrator 12 of FIG. 1) and providing the user with the ability to submit instructions to configure and analyze the network devices. In this example, management module 24 further includes configuration module 26, translation module 28, analysis module 29, and anomaly detection module 31.

Management module 24 is configured to receive an intent (e.g., a high-level configuration instruction or anomaly detection instruction) for a set of managed network devices from a user, such as administrator 12, or another system (hereinafter, "the user"). In some examples, management module 24 may be referred to herein as a "fabric manager." Over time, the user may update the configuration instructions, e.g., to add new services, remove existing services, or modify existing services performed by the managed devices. Further, the user may update anomaly detection instructions over time to change how the analysis module 29 uses telemetry data to detect an anomaly. The intents may be structured according to, e.g., YANG. In some examples, management module 24 also provides the user with the ability to submit translation functions that translation module 28 executes to transform intents to device-specific, low-level configuration instructions, as discussed below.

Network management system 10 also includes configuration database 40. Configuration database 40 may include a data structure describing managed network devices, e.g., network devices 14. Configuration database 40 may act as an intent data store, which may be used to persist and manage collections of intent data models. For example, configuration database 40 may include information indicating device identifiers (such as MAC and/or IP addresses), device type, device vendor, devices species (e.g., router, switch, bridge, hub, etc.), or the like. Configuration database 40 may store current configuration information (e.g., intent data model, or in some cases, both intent data model and low-level configuration information) for the managed devices (e.g., network devices 14). Configuration database 40 may include a database that comprises a intent data model. Configuration database 40 may be a graph database (graphDB) designed to represent and query data structured as graphs, consisting of nodes, edges, and properties.

Management module 24 may maintain a data structure in configuration database 40. The data structure may include a plurality of vertices and a plurality of edges, each vertex of the plurality of vertices representing a respective network device of a plurality of network devices (e.g., network devices 14) or a respective stateless intent of a plurality of stateless intents, and the plurality of edges defining relationships between the plurality of vertices. Management module 24 may receive an indication of a stateful intent. For example, management module 24 may receive intent unified-graph-modeled configuration data for a set of managed network devices from a user, such as administrator 12. This intent can be translated and configured into the graph data structure.

Translation module 28, which may also be referred to herein as a "device manager," may determine which devices are managed using configuration database 40. Translation module 28 determines which of translation functions 30 to execute on the high-level configuration instructions based on the information of configuration database 40, e.g., which of the devices are to receive the low-level configuration instructions (e.g., device-level configuration instructions). Translation module 28 then executes each of the determined translation functions of translation functions 30, providing the high-level configuration instructions to the translation functions as input and receiving low-level configuration instructions. Translation module 28 may then provide the low-level configuration instructions to configuration module 26.

After receiving the low-level configuration instructions from translation module 28, configuration module 26 sends the low-level configuration instructions to appropriate managed network devices for which configuration is to be updated via network interface module 32. Network interface module 32 passes the low-level configuration instructions to network interface 34. Network interface 34 forwards the low-level configuration instructions to the network devices. In some examples, functions of translation module 28 may be performed by network devices. For example, control unit 22 may output an indication of the high-level configuration instructions to a network device and an agent for translation module 28 operating at the network device translates the received high-level configuration instructions into low-level configuration instructions for the network device.

Although user interface 36 is described for purposes of example of allowing administrator 12 (FIG. 1) to interact with network management system 10, other interfaces may be used in other examples. For example, network management system 10 may include a representational state transfer (REST) client (not shown) that may act as an interface to another device, by which administrator 12 may configure network management system 10. Likewise, administrator 12 may configure network devices 14 by interacting with network management system 10 through the REST client.

Analysis module 29 may analyze telemetry data in telemetry database 39 to determine baseline data 42. For example, analysis module 29 may analyze a time series of data collected by data collection module 37 and stored as historical telemetry data 41 to determine baseline operating characteristics for temperature, voltage, current draw etc. of a network device. Analysis module 29 can determine multiple sets of baseline data. For example, analysis module 29 can analyze the time series of data to determine baseline operating characteristics for a particular network device and/or a group of network devices. For example, analysis module 29 can determine baseline operating characteristics for a group of network devices that are from the same vendor, that are the same make and/or model, that are in the same location, etc. In some examples, analysis module 29 may determine baseline operating characteristics with respect to a time of day, day of week, week of year etc. As an example, a network device (e.g., network device 14A of FIG. 1) may communicate more data during working hours of working days when compared to non-working hours and on weekends. As a result, baseline operating temperature, voltage, and/or current parameters may be higher during working hours than during non-working hours. As an additional example, a data center may have different temperature characteristics in different parts of the data center. For example, a data center may have different cooling capacity in different areas of the data center, or there may be more equipment generating heat in some areas of the data center. As a result, network devices in one area of a data center may have different baseline operating temperatures than network devices in a different area of the data center.

In some aspects, baseline data 42 may be based on a time series of data obtained from historical telemetry data 41 that may be collected over a thirty day period. However, other time periods greater than or less than thirty days are possible. In general, the collection period may be dependent on data storage availability of network management system 10. As new data is collected, analysis module 29 may utilize the new data to recalculate baseline data 42. For example, analysis module 29 may maintain baseline operating characteristics such as a baseline operating temperature or baseline voltage as a moving average of the most recent thirty day period.

Analysis module 29 can determine various parameters from the historical telemetry data 41 to generate baseline data 42 for network devices and groups of network devices. As an example, analysis module 29 may perform statistical analysis to determine various baseline statistical measures associated with the time series of values for operating temperature, voltage, current draw, etc. For example, analysis module 29 may determine average values, standard deviations, quantiles, percentile thresholds, probability density function, etc. Analysis module 29 can use the baseline statistical values to determine anomaly thresholds for various parameters associated with network devices and groups of network devices. The threshold may set a lower bound and/or an upper bound for an operating characteristic. Analysis module 29 can also perform regression analysis on the time series data to determine relationships between operating characteristics, and trends in the values of operating characteristics.

In some aspects, a parameter may be based on a single operating characteristics, such as temperature, voltage, current draw, etc. In some aspects, the parameter may be based on a combination of operating characteristics of the network device. Analysis module 29 can assign a score based on the values of the combination of operating characteristics. Further, analysis module 29 can perform statistical analysis of the scores determined from the time series of historical data. For example, analysis module 29 can determine a score for each set of telemetry data that is collected for a network device over time. Analysis module 29 can then determine average values, standard deviations, quantiles, percentile thresholds, probability density function, etc. for the set of scores. Analysis module 29 can use the baseline statistical values to determine anomaly thresholds for the score with respect to the network device and with respect to groups of network devices. Analysis module 29 can also perform regression analysis on the time series of scores to determine relationships between operating characteristics and the score, and trends in the values of the score.

Anomaly detection module 31 can receive current telemetry data from data collection module 37 and compare the current telemetry data to thresholds in anomaly thresholds 43. If an instant (e.g., a most recently obtained) value of a parameter determined from operating characteristics and/or network performance data in the telemetry data for a network device does not satisfy an anomaly threshold for the operating characteristic, anomaly detection module 31 can determine that an anomaly event has occurred with respect to the network device. Anomaly detection module 31 can store anomaly event related data in telemetry database 39. The event related data can include a timestamp of when the event occurred and the type of event (overvoltage, undervoltage, overcurrent, undercurrent, overtemperature, etc.). Anomaly detection module 31 can generate an alert indicating that the anomaly event has occurred. In some aspects, in response to the alert, the anomaly detection unit can output details regarding the alert on a report of network anomalies. In some aspects, in response to the alert, an administrator 12 can request that anomaly detection module 31 generate user interface data 33 to present information regarding an alert event. Anomaly detection module 31 may utilize the timestamp for the alert event to obtain telemetry data for the network device from telemetry database 39. Anomaly detection module 31 may obtain telemetry data for the network device for a first time period occurring before the anomaly was detected, a second time period when the anomaly was detected, and a third time period after the anomaly was detected. The time periods may be set to a default value, or the administrator 12 can specify the time periods to use. Anomaly detection module 31 may present the baseline values for an operating characteristic in addition to the value that caused the anomaly to be detected. For example, anomaly detection module 31 can present the baseline value for the network device characteristics, or a group to which the device belongs, and can present the value that caused the anomaly to be detected. Additionally, anomaly detection unit can present network traffic data flowing through the network device at the time the anomaly occurred.

Anomaly detection module 31 may perform linear regression on the time series database to determine if an operating characteristic for a network device is trending away from the baseline value. If the rate of change exceeds a threshold value, anomaly detection module 31 can indicate an anomaly for the network device exhibiting the trend.

Anomaly detection module 31 may store anomaly data to memory 27 or, e.g., to an internal or external database and may output anomaly data 202 to analysis system 17.

In accordance with techniques of this disclosure, analysis system 17 stores knowledge cards 204. Each knowledge card of knowledge cards 204 defines a method for identifying a key anomaly and its associated anomalies. A knowledge card is a collection of data that contains (or includes a query or other mechanism for identifying) a specific pattern of nodes and edges in a network graph, as well as anomalies, health, or other properties associated with the nodes of the network graph. The knowledge card also contains an indication of the key anomaly and associated anomalies. The key anomaly is the anomaly for which associated anomalies are detected using the knowledge card graph query, and the associated anomalies is a list of anomalies potentially caused by the key anomaly. A knowledge card may also contain one or more of a unique identifier for the knowledge card, a graph query language identifier, a version of the knowledge card to indicate revisions, an organization identifier, a modification timestamp, the author, or an active flag that indicates whether the knowledge card is used for impact analysis. A user or organization will select one or more of knowledge cards 204 and may set the active flag to true to cause analysis system 17 to use the selected knowledge cards for impact analysis.

A user may define new knowledge cards 204 using a user interface of analysis system 17, or by providing the data defining knowledge cards 204 via an interface (e.g. a REST interface), for instance. A graph query for a knowledge card may be the union of any subset of queries for patterns or symptomatic anomalies, and this union is mapped in the knowledge card to the key anomaly. For example, cabling, interface, configuration, and service anomalies may have associated graph queries, and a union of such graph queries can be set as the graph query for the knowledge card and mapped to a cable cut as the key anomaly. The user may be an expert user with experience and understanding of the relationships among various anomalies, which the expert user can associate with a key anomaly because of an understanding of causalities within the network.

In the following example of a knowledge card graph query and anomalies, "Link broken" is a key anomaly, and its associated anomalies are "operation down" anomaly, "LLDP missing" anomaly, and "BGP" anomaly. A "Link Broken" knowledge card may thus be created to identify, from a network graph, a situation in which two interfaces are operationally down, LLDP is missing on both sides of a link, and BGP peered across that link is operationally down. This situation can be expressed in a pseudo graph query language, as below, to define knowledge card's graph query:

```
 match(
      node('system', name='sys_one', tags=not_none())
       .where(lambda sys_one:'cabling_anomaly' and 'link_broken' in sys_one.tags)
       .out('hosted_interfaces', name='e_1').node('interface', name='int1',tags=not_none())
       .where(lambda intl:'cabling_anomaly' and 'bgp_mismatch' in int1.tags).out('link',
      name='e2').node('link', name='link1', tags=not_none()).where(lambda link1:
       'cabling_anomaly' in link1.tags)
       )
```

In some examples, analysis system 17 stores action cards, which analysis system uses to analyze contributing factors to an anomaly (whether a key anomaly or associated anomaly). For example, for a given ECMP imbalance, analysis system 17 can perform actions of the action card to identify the cause of the ECMP imbalance. The actions of the action card may cause the analysis system 17 to perform actions to identify elephant flows in the path, poor hashing, or missing routes, for instance.

In some examples, a knowledge card specifies synthetic or anticipated anomalies. These are anomalies that are not determined to have occurred by network management system 10, but are instead anomalies that are likely to occur where there is a match to the graph query of the knowledge card - when, e.g., analysis system 17 identifies a key anomaly. Synthetic or anticipated anomalies allows analysis system 17 to associate (or "tag") nodes of a network graph (e.g., intent 7 or network graph 13), services, or clients with the synthetic or anticipated anomalies, which can be used to predict or determine likely impacts to other nodes, services, or clients operating over network 2 and provide an indication of same to the user. Because services and clients are not natively part of the intent network graph, analysis system 17 may also add nodes to the intent network graph representing services or clients to associate these nodes with the synthetic or anticipated anomalies. As an example, a route missing key anomaly will likely impact a virtual network. A knowledge card may specify a synthetic anomaly for virtual networks associated with the route in an intent, network graph 13, or other network configuration or operational data. Analysis system 17 may then associate the synthetic anomaly for these virtual networks as an anomaly, even though this anomaly is synthetic in that the anomaly has not been detected in network 2 by network management system 10. Analysis system 17 may output an indication of this synthetic anomaly to a user.

A user may select which of knowledge cards 204 are active, i.e., used by analysis system 17 when identifying associated anomalies of a key anomaly. Analysis system 17 may apply one or more of knowledge cards 204 on-demand, periodically (e.g., every 1 second, every 5 seconds, every 30 second, etc.), or in response to receiving anomaly data 202 indicating new anomalies, for example.

In some examples, one or more modules of network management system 10 may be implemented as part of analysis system 17. For example, anomaly detection module 31 may be implemented as part of analysis system 17.

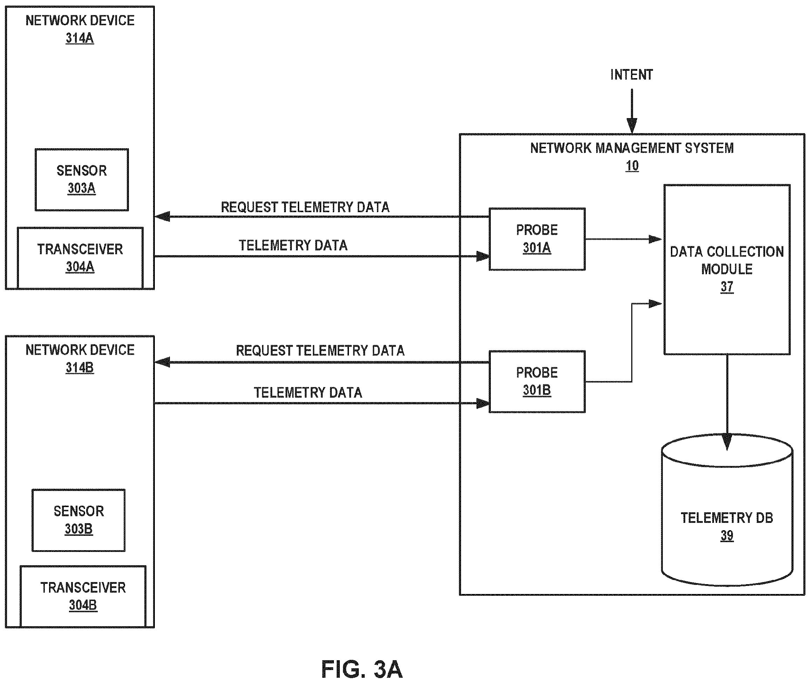

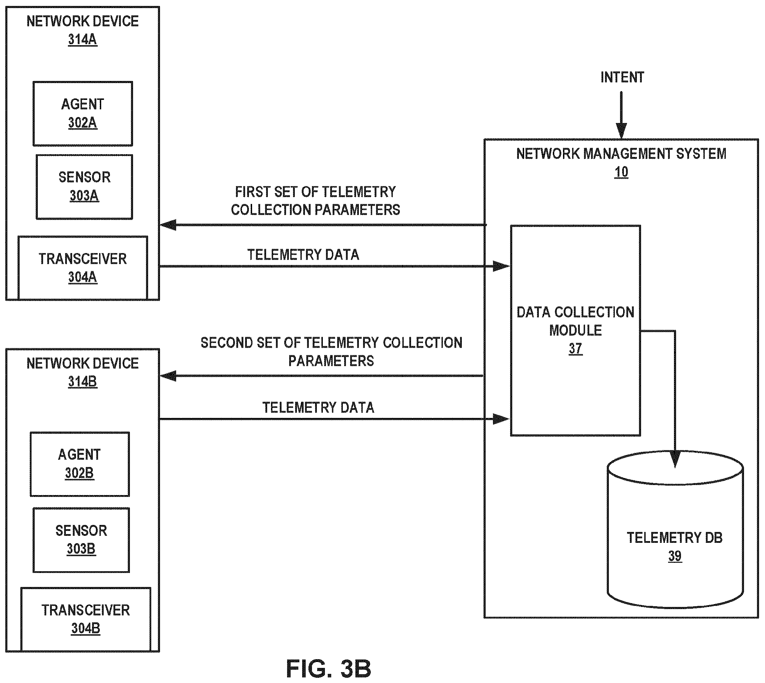

FIGS. 3A and 3B are conceptual diagrams illustrating example network devices in communication with a network management system, in accordance with techniques of this disclosure. FIGS. 3A and 3B are discussed in the context of FIGS. 1-2 for example purposes only. Network devices 314A and 314B of FIGS. 3A and 3B may be implementations of network devices 14 of FIG. 1. In the example of FIGS. 3A and 3B, network device 314A includes transceiver 304A and network device 314B includes transceiver 304B. In some aspects, transceivers 304A and 304B may be optical transceivers, however, the disclosure is not limited to such transceivers. Network devices 314A and 314B may include sensors 303A and 303B respectively.

In the example of FIG. 3A, data collection module 37 may utilize an intent provided by administrator 12 to determine telemetry data that is to be collected from network devices 314A and 314B. In response to determining, based on the intent, that telemetry data is to be collected from network devices 314A and 314B, data collection module 37 can initiate probes 301A and 301B. A probe 301 is configured to obtain telemetry data from a network device. For example, probe 301A can be configured to use application program interfaces (APIs) or other interfaces provided by network device 314A to obtain telemetry data from network device 314A and probe 301B can be configured use APIs or other interfaces provided by network device 314B to obtain telemetry data from network device 314B. In some aspects, the APIs or other interfaces used by a probe to collect telemetry data may be proprietary to the network device. As an example, many network devices implement a "show" command that can be used to by probes 301A and/or 301B to obtain telemetry data from such network devices. In some aspects, a probe may use a standardized interface such as SNMP to collect telemetry data.

A probe can issue a request to the network device indicating the telemetry data that is being requested. As an example, in response to receiving a request for telemetry data from probe 301A, network device 314A can obtain the requested telemetry data from sensor 303A and/or from transceiver 304A. Similarly, in response to receiving a request for telemetry data from probe 301B, network device 314B may obtain the requested telemetry data from sensor 303B and/or from transceiver 304B. A sensor such as sensor 303A or 303B may be configured to provide temperature data, current data, voltage data etc. Although one sensor 303 and one transceiver 304 are shown for network devices 314A and 314B, a network device 314 may have more than one sensor 303 and/or more than once transceiver 304. After obtaining their respective telemetry data, probes 301A and 301B can provide their respective telemetry data to data collection module 37, which can store the telemetry data in telemetry database 39 along with a timestamp to indicate when the telemetry data was collected.

In the example shown in FIG. 3B, data collection module 37 may utilize an intent provided by administrator 12 to determine telemetry data that is to be collected from network devices 314A and 314B. In some aspects, network management system 10 may communicate the type of telemetry data to be collected from network devices 314A and 314B. As an example, network management system 10 may communicate a first set of telemetry collection parameters to agent 302A and a second set of telemetry parameters to agent 302B that inform agents 302A and 302B that they are to collect operating temperatures, operating voltages, operating current etc. from their respective network devices 314A and 314B. Agents 302A and 302B may collect the indicated telemetry data and provide the telemetry data to data collection module 37 for storage as time series data in telemetry database 39. In some aspects, a push model may be used where agents 302A automatically and periodically provide their respective telemetry data to data collection module 37. In some aspects, a pull model may be used where agents 302A and 302B provide their respective telemetry data to data collection module 37 in response to a request received from data collection module 37.

Agents 302A and 302B may obtain operating characteristics for inclusion in the telemetry data from various sources. As an example, agent 302A may obtain operating characteristics from sensor 303A and/or from transceiver 304A. Similarly, agent 302B may obtain operating characteristics from sensor 303B and/or from transceiver 304B. After obtaining their respective telemetry data, agents 302A and 302B can provided the telemetry data to data collection module 37, which can store the telemetry data in telemetry database 39 along with a timestamp to indicate when the telemetry data was collected.

FIG. 4 is a conceptual diagram showing a network graph 700 for the network of FIG. 1, in accordance with techniques of this disclosure. Network graph 700 may be an intent network graph (e.g., intent 7) or model the state of a network (e.g., network graph 13). In the graph shown in FIG. 4, nodes 714A-714G correspond to network devices 14A-14G of FIG. 1. Node 714A corresponding to network device 14A is the root of the graph. From the example shown in FIG. 4, it can be seen node 714B has five downstream nodes 714C-714G. Node 714F has a single downstream node 714G. Thus, a failure of node 714B affects more nodes than a failure of node 714F. Anomaly detection module 31 can use the number of affected nodes to determine a risk factor associated with an anomaly. Thus, in this example, an anomaly at network device 14B, represented by node 714B, poses a higher risk than an anomaly at network device 14F, represented by node 714F. In some aspects, anomaly detection module 31 can generate a graphical representation of the network graph, with nodes experiencing anomaly highlighted in the graphical representation. In some aspects, the graphical representation can highlight nodes posing higher risk differently than nodes posing lower risk of failure (e.g., color coding).

FIG. 5 depicts an example user interface displaying a network graph for a network, in accordance with techniques of this disclosure. Network graph 578 is a directed acyclical graph. A user may provide user input to user interface to interact with the network graph. As shown, a user has selected nodes 580A-580D (collectively, "nodes 580"), which has the effects of (1) highlighting the nodes and edges into or out of the selected nodes 580, and (2) displaying respective popups showing properties of nodes 580.

Types of nodes of a network graph used in intent-based networking may include the following:
Device or System nodes that represent physical devices in the network, such as switches (e.g., spine and leaf switches in a Clos architecture), routers, servers (e.g., storage or compute), firewalls, load balancers, storage devices.

Interface nodes that represent individual network interfaces or ports on devices, such as Ethernet ports or logical interfaces (e.g., VLANs, LAGs).

Logical Nodes that represent abstract or logical entities in the network, such as VLANs (Virtual Local Area Networks), VRFs (Virtual Routing and Forwarding instances), routing protocols (e.g., BGP, Open Shortest Path First - OSPF), or IP subnets.

Link Nodes that represent physical or logical links between devices, such as cabling connections between devices (physical links), overlay/virtual network connections (logical links), LAGs (Link Aggregation Groups).

Services Nodes that represent services running on top of the network, such as DHCP (Dynamic Host Configuration Protocol), DNS (Domain Name System), or IPAM (IP Address Management).

Policy Nodes that represent security or operational policies applied to the network, such as access control lists (ACLs), firewall rules, Quality of Service (QoS) policies.

Group or Role Nodes that represent groups or roles of devices in the network, such as device roles (e.g., "Spine", "Leaf", "Border Leaf") or rack groups (e.g., devices in the same rack).

Types of relationships for edges among nodes in a network graph used in intent-based networking may include the following:
Connectivity Relationships that represent physical or logical connections between devices, interfaces, or links, such as a connection between a leaf switch and a spine switch, a relationship between a server and the leaf switch it is connected to, or a link aggregation connection (LAG) between two devices.

Routing Relationships that represent relationships formed by routing protocols that establish how packets are forwarded in the network, such as a BGP peering relationship between two routers, or an OSPF adjacency between two devices.

Membership Relationships that represent the inclusion of an interface, device, or logical entity in a particular group or domain, such as an interface being a member of a specific VLAN, a device role assignment (e.g., a node being part of the "Spine" group), or a VRF association between a device and a virtual routing instance.

Service Relationships that represent relationships between network entities and the services they support or provide, such as a relationship between a DHCP server and a subnet it serves, a relationship between a DNS server and the devices that use it for name resolution.

Policy Relationships that represent the application of policies or rules to specific network devices, interfaces, or groups, such as an access control list (ACL) applied to a specific interface, a firewall rule applied to traffic between two VLANs, or a QoS policy applied to prioritize certain types of traffic.

Traffic Flow Relationships that represent the actual data flow paths through the network, helping analyze the flow of traffic from one node to another.

An example edge relationship and nodes subgraph of a network graph for server to switch connection is as follows. The subgraph has a leaf switch node, a server node, and interface nodes representing the Ethernet port on both the switch and the server. A connectivity relationship is between the switch's interface node and the server's interface node, representing the physical connection.

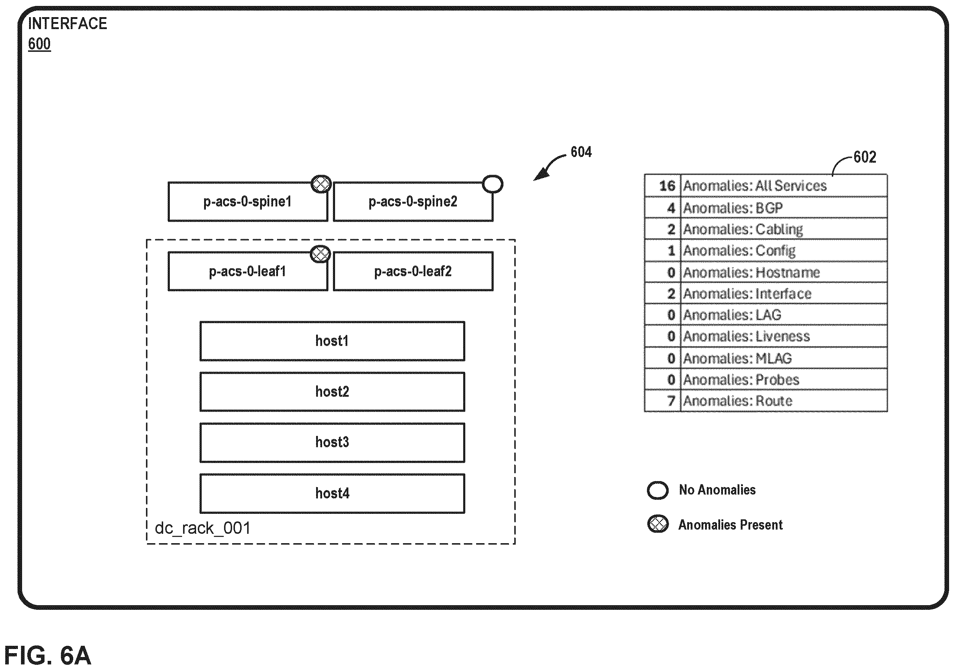

FIGS. 6A-6D depict user interfaces generated and output, for display, in accordance with techniques of this disclosure. The user interfaces may be generated and output by analysis system 17 that obtains anomaly data 202 and the intent for network 2. The intent may be in the form of a graph, which allows for augmenting nodes of the intent with the anomaly data and presenting a visualization of the graph with the anomalies.

FIG. 6A depicts a user interface 600 showing a simple data center fabric topology 604 of switches and hosts and a list of anomalies 602 detected by network management system 10. Devices tagged with an anomaly are visually tied with a user element indicating "Anomalies Present". User interface 600 does not display any key anomalies, but instead displays all of the anomalies detected, using list of anomalies 602. List of anomalies 602 is extensive, despite the relatively simple topology 604, and investigating for root causes of the anomalies would be time-consuming and challenging to the user.

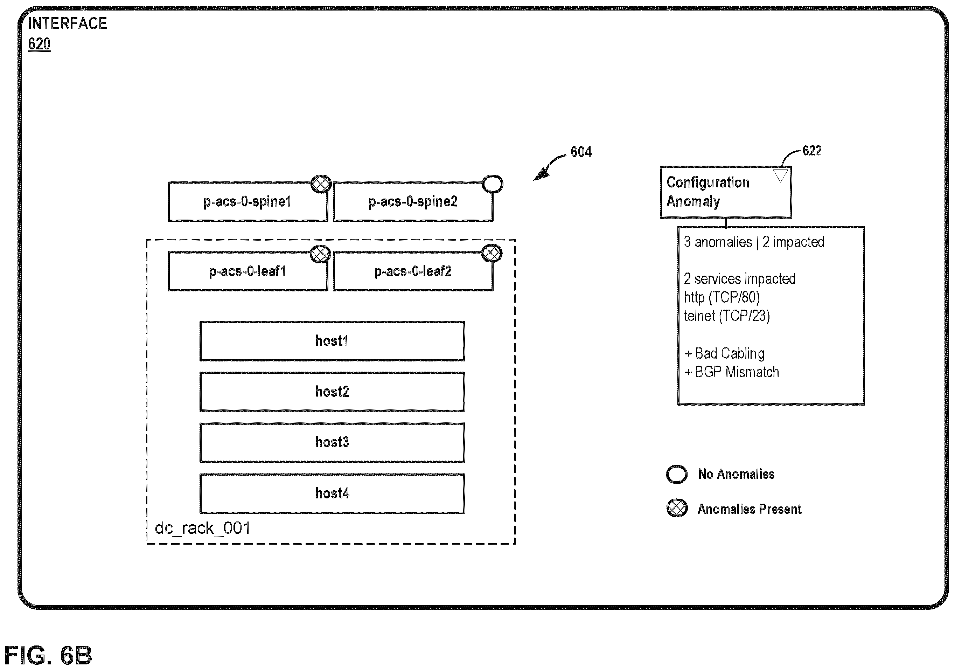

FIG. 6B depicts user interface 620, similar to user interface 600 but showing a key anomaly in lieu of the full list of anomalies 602. Analysis system 17 associates anomalies indicated in anomaly data 202 to nodes of the intent. Analysis system 17 applies a knowledge card 204 that is mapped to a Configuration Anomaly as the key anomaly, and more specifically applies the graph query of the knowledge card, to a network graph representing an intent, augmented with anomalies as properties of the nodes. Based on matching the query to network graph 13, analysis system 17 has identified a Configuration Anomaly with 2 associated anomalies ("Bad Cabling" and "BGP Mismatch"). Analysis system 17 may therefore group the anomalies and generates user interface 620 to display them under the Configuration Anomaly user element 622, which the user can expand by selecting the drop down to show details of the associated anomalies as well as, in this example, 2 impacted services. Rather than hundreds or even thousands of anomalies to review and investigate, leading to alert fatigue, user interface 620 may instead present the operator with one or more key anomalies that, once investigated and remediated, are likely to also remediate those anomalies associated with the anomalies. This may enable the operator or another system to more quickly resolve issues with the network. User interface 620 may provide a clear picture of issues and impacts on applications / services running over the network and facilitate distinguishing which anomalies were a side effect of a key anomaly or unrelated to the key anomaly.

FIG. 6B depicts user interface 640 showing a topological layout 644 to represent topology 604. In some examples, analysis system 17 maps key anomalies present in the network into issues at the application level. Services executing on compute nodes (as shown, host1-host4) connected via the network and clients interacting with the services may be impacted by key anomalies. Analysis system 17 stores service impact data that indicates one or more services that may be impacted by a key anomaly. For example, a down interface may prevent access to a service running on a compute node that uses the interface for communication. Service impact data may identify the one or more services executing on particular servers 11 of network 2. Using such service impact data, analysis system 17 may determine that if server 11A is experiencing or impacted by an associated anomaly for the key anomaly (or the key anomaly itself), then all services identified as executing on server 11A are impacted. Service impact data may identify the one or more services that may be impacted by a key anomaly by identifying one or more services in the corresponding knowledge card, e.g., "telnet", to indicate that the identified services are prone to impact when executing on a server in some way affected by the key anomaly. Using such service impact data, if analysis system 17 determines that server 11A is experiencing or impacted by an associated anomaly for the key anomaly (or the key anomaly itself), the identified services are impacted if executing on server 11A.

Upon identifying a key anomaly, analysis system 17 uses the service impact data to identify one or more services that may be impacted by the key anomaly. As depicted in FIG. 6B, analysis system 17 may use the service impact data to determine that any services, or particularly specified services, executing on any host connected to p-acs-0-leaf1 may be affected by the Configuration Anomaly affecting that leaf switch. This includes host1-host4. Analysis system 17 may output an indication of those determined one or more services. Analysis system 17 generates user interface 620 to list 2 services impacted: http and telnet.

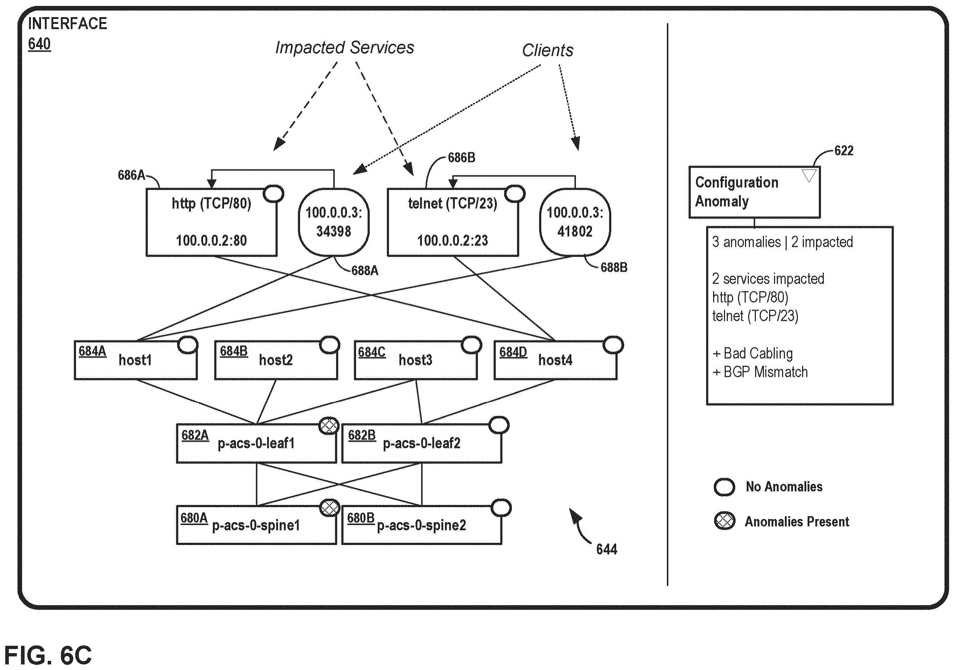

In some examples, analysis system 17 extends a visual depiction of at least a portion of the topology of the network to include the service topology, effectively extending the network graph to visually indicate services and/or clients that are affected by a key anomaly. Service impact data associated with a key anomaly may specifies that a Configuration Anomaly may impact all services running on a compute node connected to an impacted leaf switch. As depicted in FIG. 6C, analysis system 17 generates user interface 640 to extend a topology of the simple network to indicate services 686A-686B running on affected host1 and host4 (note that the hosts are not themselves shown as experiencing anomalies) and to indicate clients 688A-688B connected to or otherwise communicating with services 686A-686B. These indications of affected services and clients displayed on user interface 640 may be considered synthetic anomalies, in that they are not identified by network management system 10 using telemetry, configuration, or operational data from the network or hosts, but they are instead identified as likely to occur due to a key anomaly, based on the service impact data.

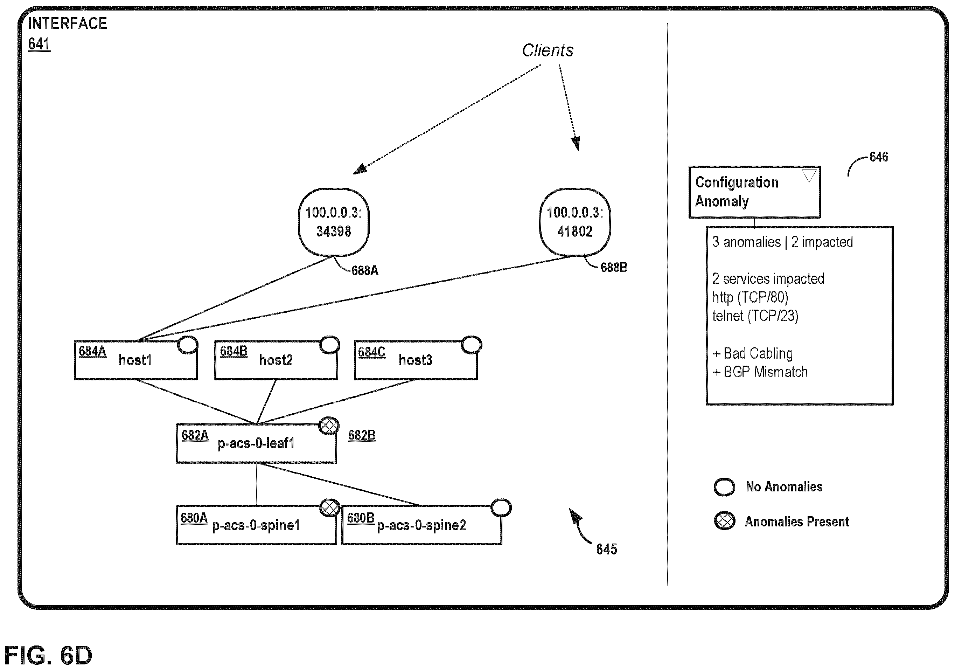

As depicted in FIG. 6D, a user may interact with user interface 640 to filter the displayed network topology to affected devices, services, and/or clients. This allows the user to "zero in" on affected areas of the network to reduce the footprint of investigation or review. In response to a user input or configuration to filter to affected devices, services, and/or clients, analysis system 17 generates user interface 641 that includes user elements for devices for which anomalies are present, devices connected to those devices, and clients connected to hosts connected by those devices.

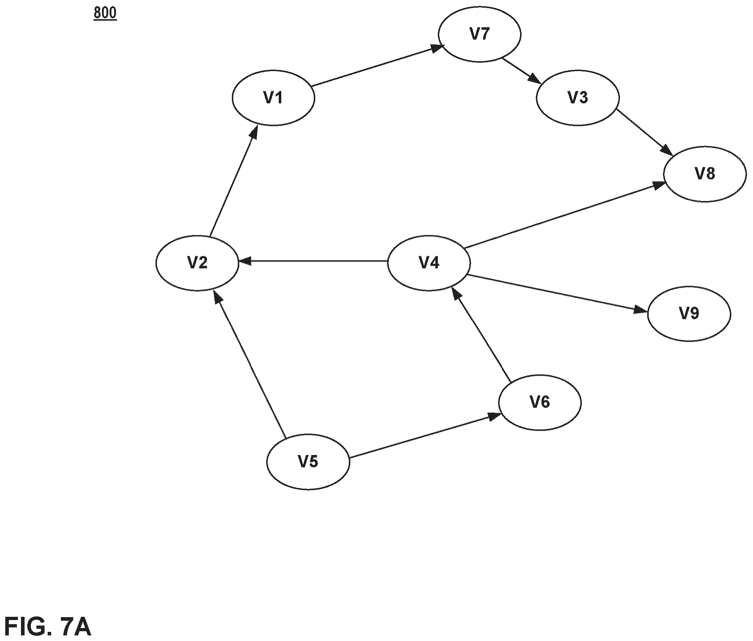

FIG. 7A depicts network graph 800 with nodes V1-V9 (collectively, "nodes V"). Network graph 800 may represent an intent (e.g., a "blueprint") or may represent the current state of the network according to a graph data model (e.g., network graph 13).

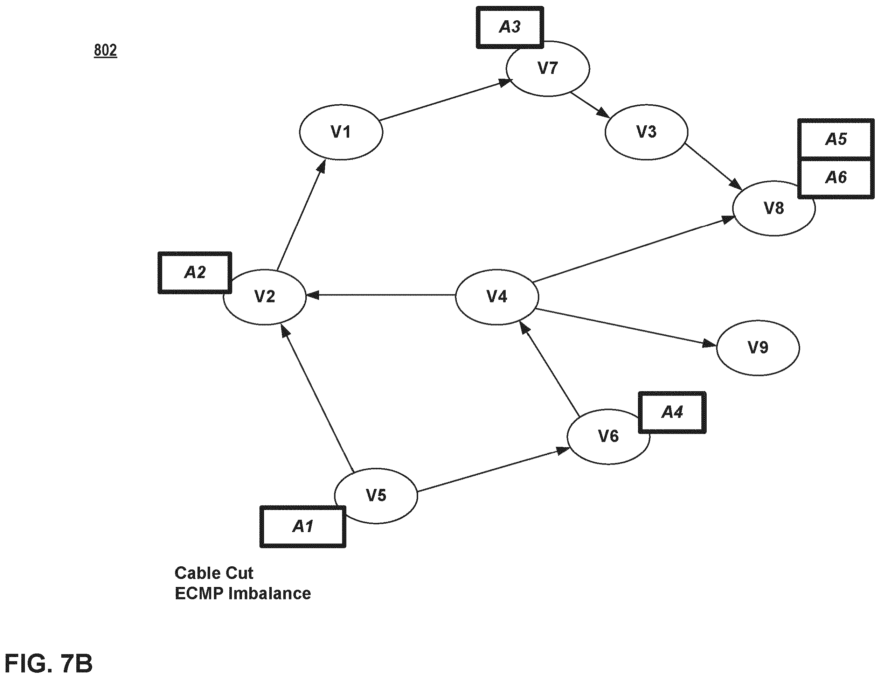

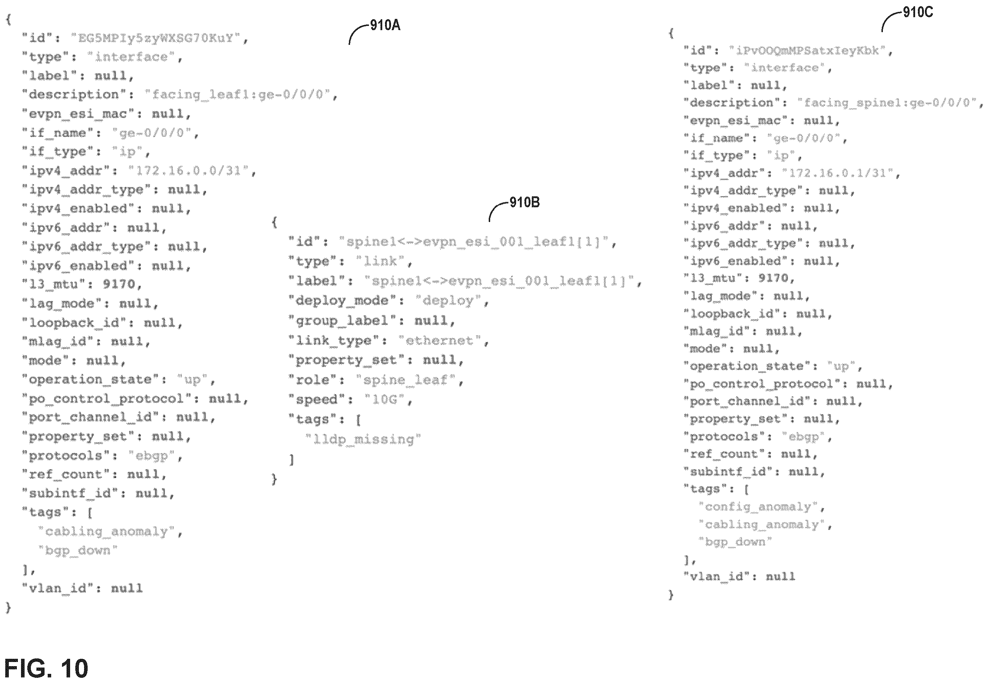

FIG. 7B depicts the network graph 800 of FIG. 7A updated with some of nodes V tagged with anomalies A1-A6 (collectively, "anomalies A") caused by a cable cut or an ECMP imbalance in the network. The updated network graph is network graph 802. For example, node V8 has been tagged with anomalies A5 and A6. Analysis system 17 may obtain anomaly data 202 and network graph 800 from network management system 10. To tag nodes V with one or more anomalies indicated in anomaly data 202, analysis system 17 may determine an appropriate node for each anomaly and associate the anomaly with the appropriate node. The appropriate node may be the node which is experiencing or causing the anomaly. To associate an anomaly with a node, analysis system 17 may add a key:value pair for the anomaly, where the key is some indicator that the value is an anomaly, and the value indicates the type of anomaly. For example, "tags:cabling_anomaly" shown in node data 910A of FIG. 10 associates an anomaly of type "Cabling Anomaly" with the corresponding node. Analysis system 17 may execute a graph query with respect to updated network graph 802 to identify associated anomalies of a key anomaly, e.g., as described in detail elsewhere in this disclosure.

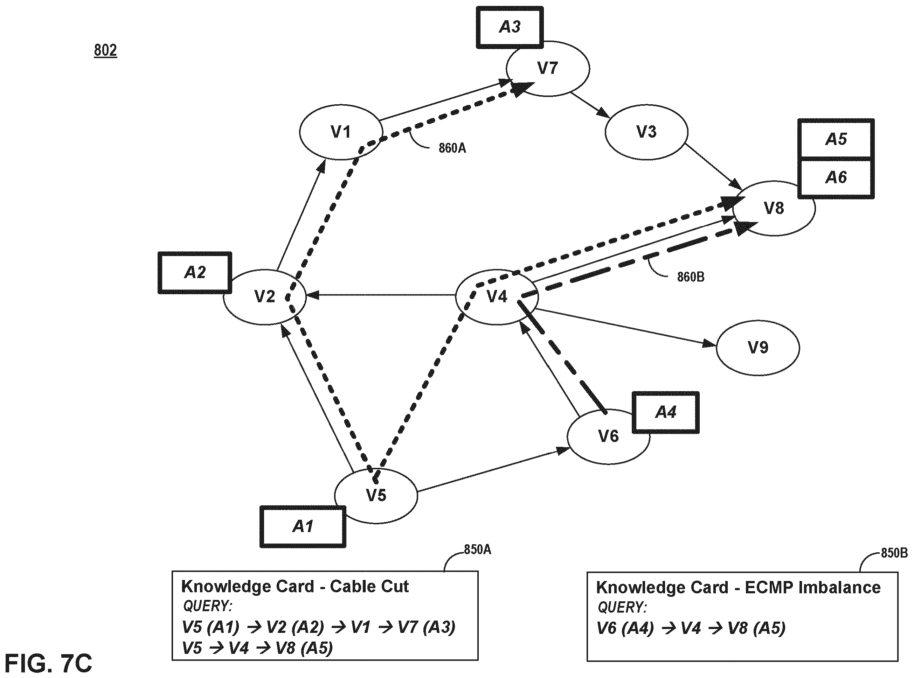

FIG. 7C depicts network graph 802 with subgraphs 860A-860B representing queries of two knowledge cards 850A-850B (collectively, "knowledge cards 850"). Knowledge card 850 is a "Cable Cut" knowledge card and may be usable for identifying a key anomaly that is a cable cut when a subgraph with tagged anomalies matches the graph query of knowledge card 850A. The subgraph may be specified using a query language, but in FIG. 7C it is shown as two paths: Path 1: V5 (A1) → V2 (A2) → V1 → V7 (A3), and Path 2: V5 → V4 → V8 (A5), where VN(AX) matches node VN tagged with anomaly AX. The subgraph 860A is present in network graph 802. Thus, the key anomaly of a cable cut is present in the corresponding network, and the other anomalies in the query are associated with this key anomaly. For instance, if A1 is the key anomaly, then anomalies A2, A3, and A5 are associated with the key anomaly. A matching subgraph 860B is shown also for the graph query of knowledge card 850B, and may similarly be used to identify associated anomalies for the key anomaly of an ECMP imbalance.

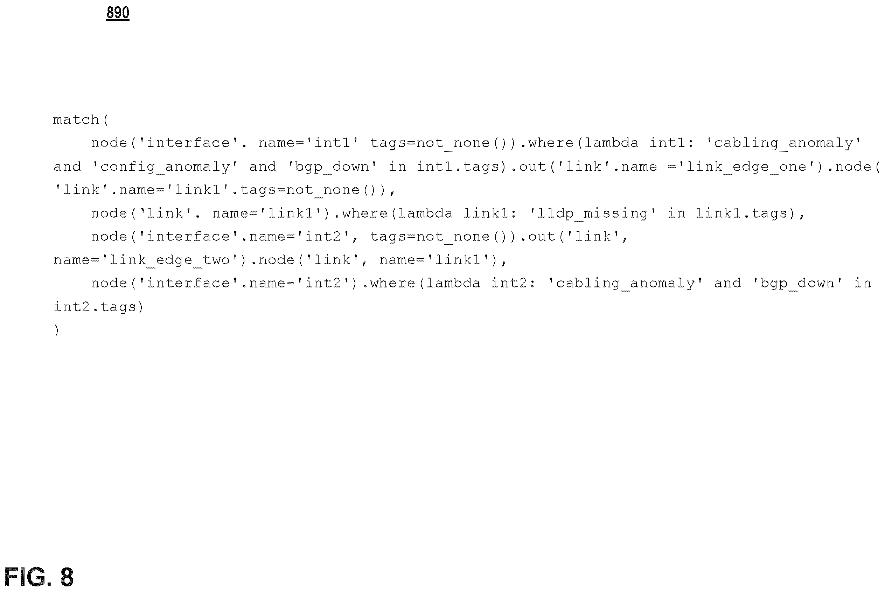

FIG. 8 is an example graph query, in accordance with techniques of this disclosure. Graph query 890 is designed to identify associated anomalies for a configuration anomaly, in particular an "interface shut", in which configuration data for an interface specifies that the interface is disabled. Such a configuration causes many additional anomalies, all of which are detected by network management system 10 and output to analysis system 17. Graph query 890 may be associated with a key anomaly and a list of associated anomalies. For example, "config_anomaly" may be the key anomaly and "cabling_anomaly", "bgp_down" (two instances, one on each side of the link) for two interface nodes and "lldp_missing" for a link node being the associated anomaly.

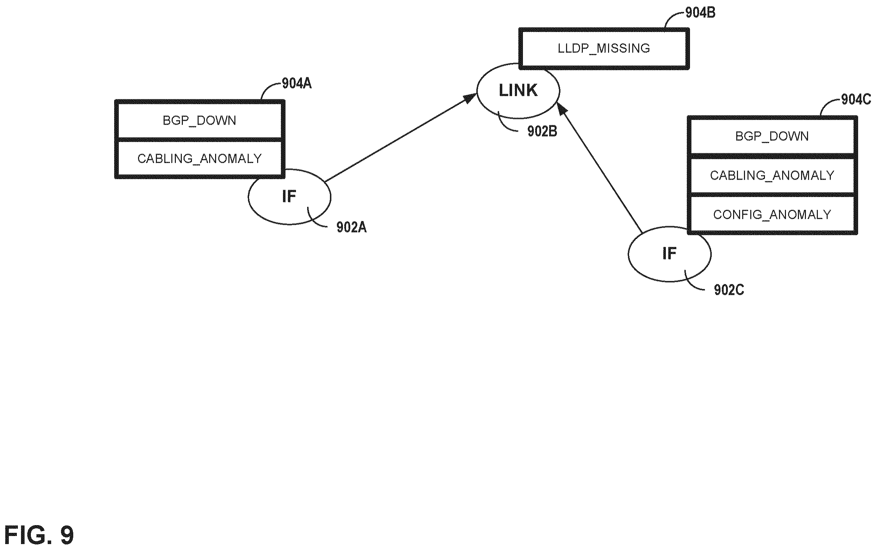

FIG. 9 depicts an example subgraph of a network graph that matches the graph query of FIG. 8, in accordance with techniques of this disclosure. The subgraph includes interface (IF) nodes 902A, 902C connected to link node 902B, which is for a link that connects the corresponding interfaces. The anomalies 904A, 904B, and 904C are associated with the interface nodes 902A, 902B, 902C so as to match graph query 890.

FIG. 10 lists properties of nodes augmented with anomaly data, in accordance with techniques of this disclosure. Node properties 910A are properties of interface node 902A and includes tags "cabling_anomaly" and "bgp_down" in structured key:value form, which indicates these anomalies are associated with interface node 902A. Node properties 910B are properties of link node 902B, and node properties 910C are properties of interface node 902C and these properties are augmented similarly.

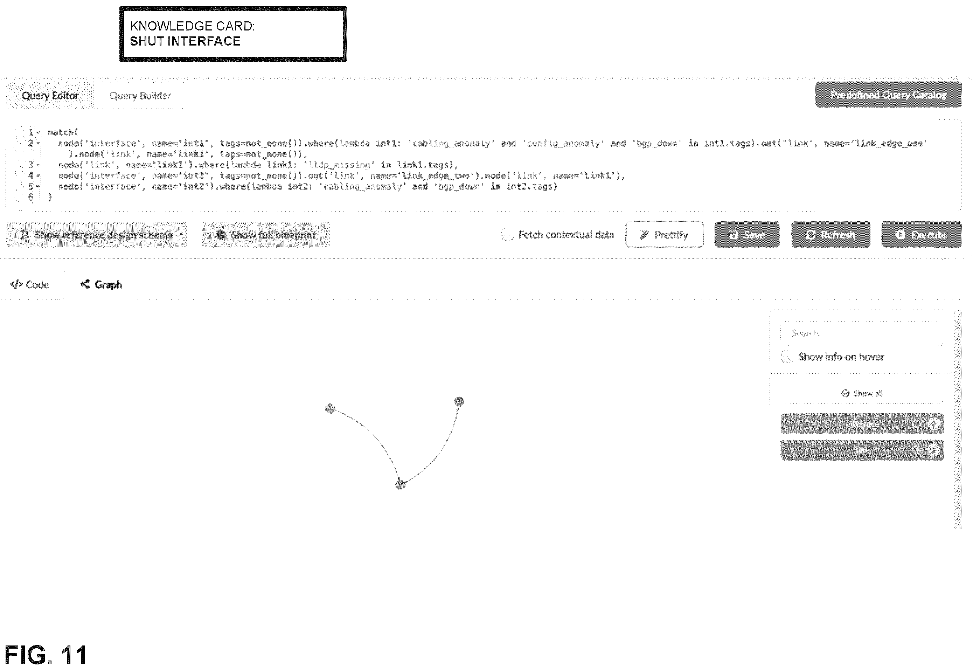

FIG. 11 depicts a user interface generated by an analysis system, in accordance with techniques of this disclosure. The user interface includes a query editor presenting graph query 890. A user, e.g., an expert user, may edit the graph query using the user interface to create a graph query for identifying associated anomalies for a key anomaly. The graph query may be included in a knowledge card. The graph on the user interface shows a subgraph for the current graph query. The subgraph may match a network graph for a network.

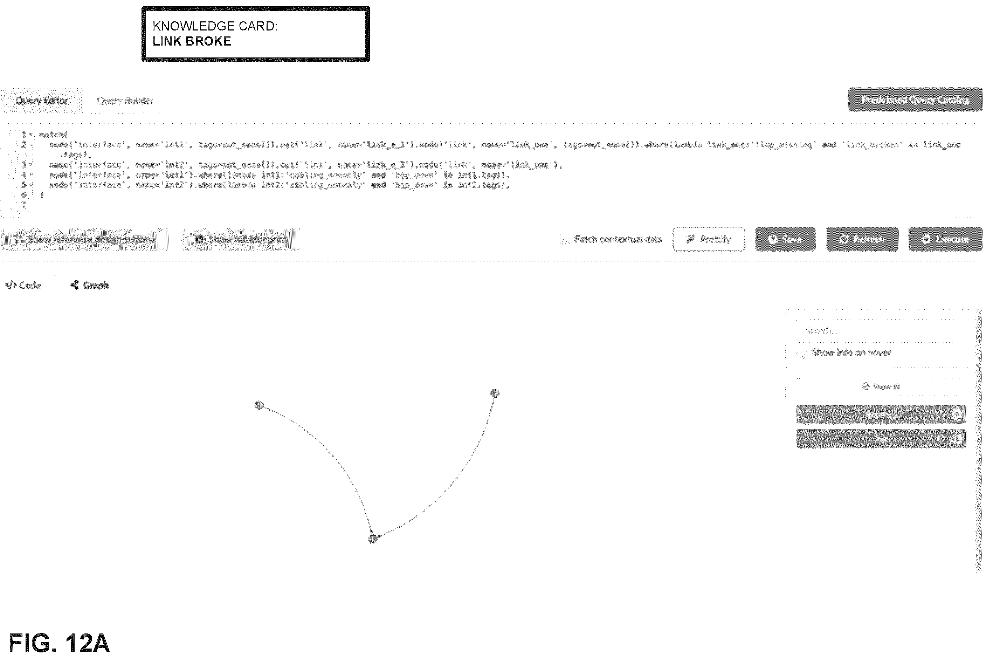

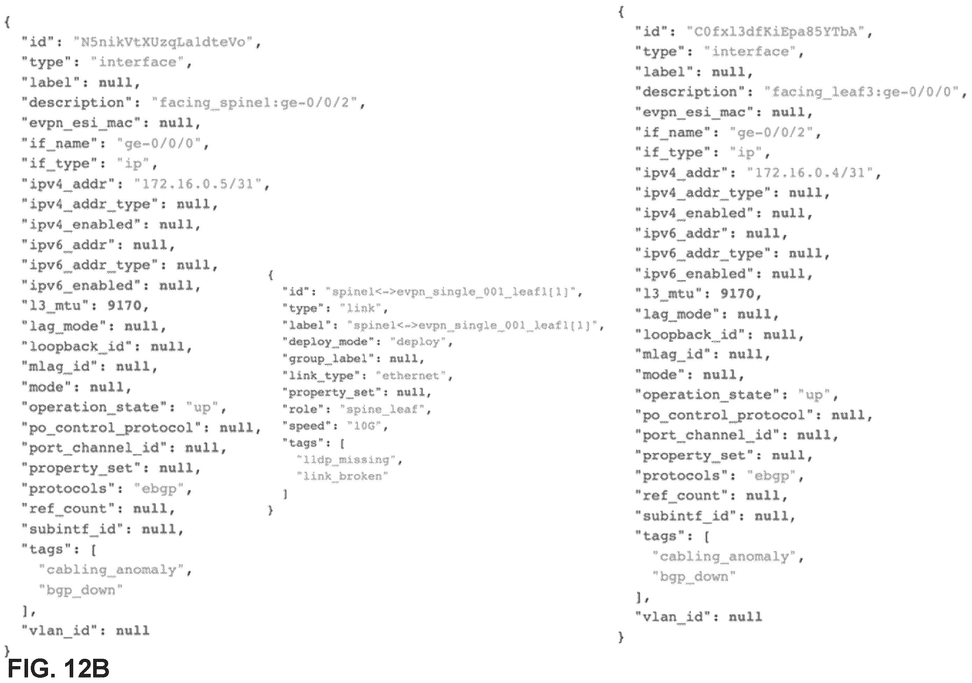

FIG. 12A depicts a user interface generated by an analysis system, in accordance with techniques of this disclosure. The user interface is similar to that depicted in FIG. 11. The graph query in the user interface is for a Link Broke knowledge card, for identifying a situation in which a link joining two interfaces is broken. FIG. 12B lists properties of nodes augmented with anomaly data, in accordance with techniques of this disclosure. These nodes, being tagged with anomalies, match the graph query in the user interface of FIG. 12A. The key anomaly may be "link_broken", with the other associated anomalies being identified by the graph query.

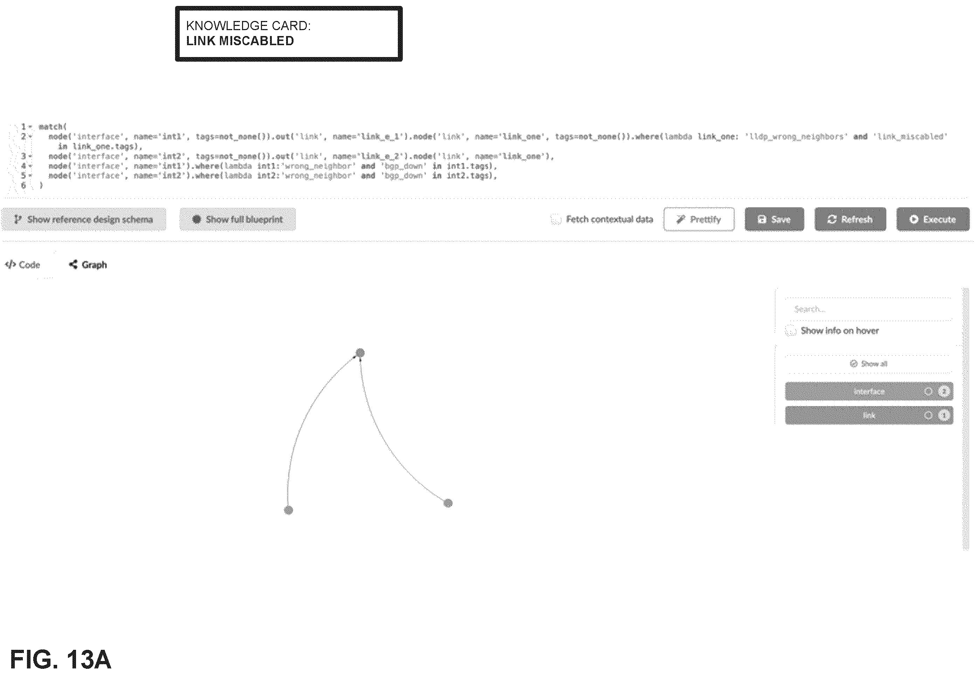

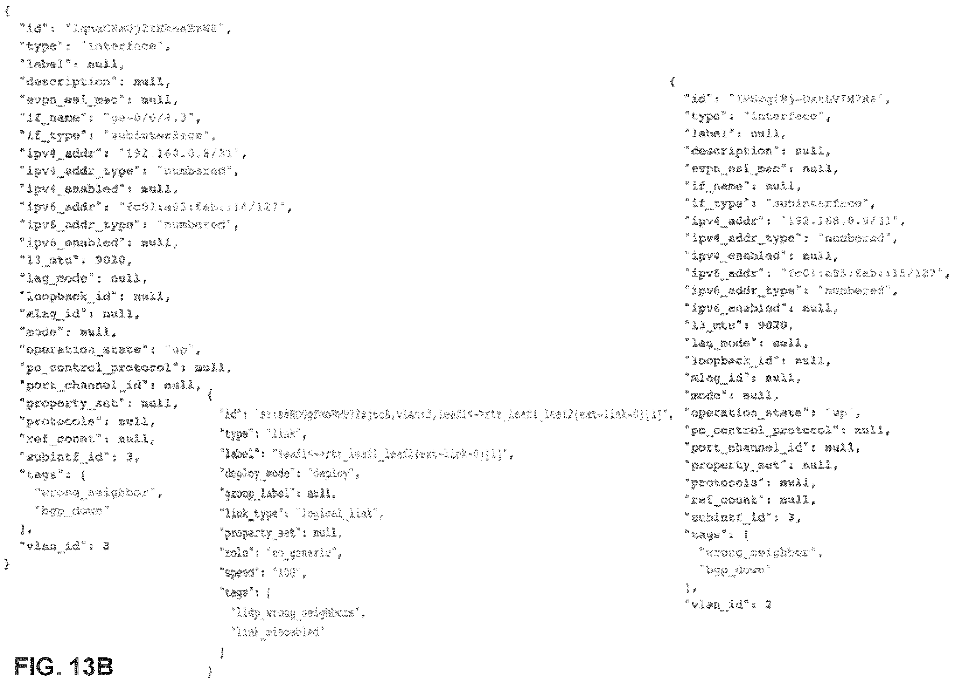

FIG. 13A depicts a user interface generated by an analysis system, in accordance with techniques of this disclosure, in accordance with techniques of this disclosure. The user interface is similar to that depicted in FIG. 11. The graph query in the user interface is for a Link Miscabled knowledge card, for identifying a situation in which a link is connecting the wrong neighbors. FIG. 13B lists properties of nodes augmented with anomaly data, in accordance with techniques of this disclosure. These nodes, being tagged with anomalies, match the graph query in the user interface of FIG. 13A. The key anomaly may be "link_miscabled", with the other associated anomalies being identified by the graph query.

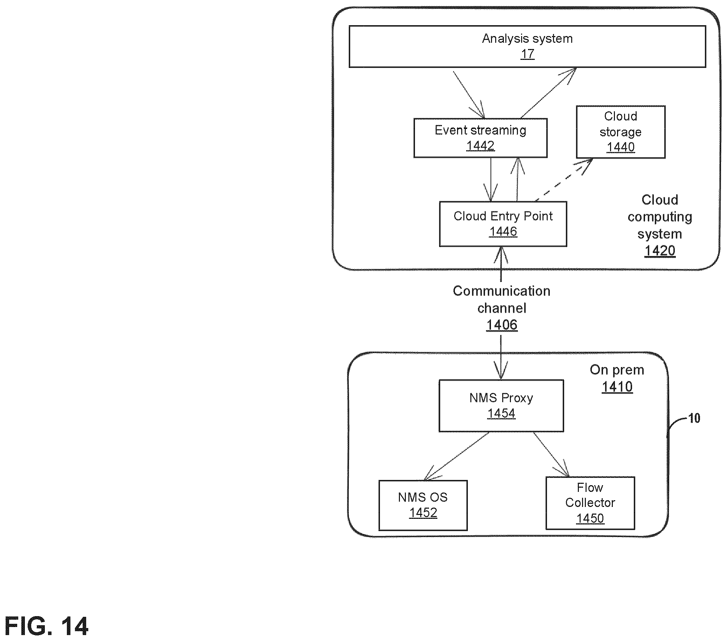

FIG. 14 is an example system implementing analysis system 17 and network management system 10 in further detail, in accordance with techniques of this disclosure. In this example deployment, network management system 10 is an on-prem 1410 solution. Analysis system 17 may be implemented as a Software as a Service (SaaS) product focused on delivering enhanced operational capabilities to solve complex Data Center problems, executed in a cloud computing system 1420. Cloud storage 1440 represents a cloud storage system for storing data used by analysis system 17 to implement techniques of this disclosure. Event streaming 1442 represents a service used by analysis system 17 and can implement data pipelines, event streaming / messaging for event pub/sub, data integration, logging and monitoring.

NMS Operating system (OS) 1452 implements functionality ascribed elsewhere in this disclosure to network management system 10. Flow collector 1450 collecting and analyzes data center network flow traffic. Flow collector 1450 may streamline the gathering of network traffic flows and telemetry by offering a seamless integration with organization-specific information. Flow collector 1450 may deliver visibility and insight into network traffic by providing granular information about network traffic flows, congestion, high latency, and packet loss; enable implementation of strategies to optimize the flow of network traffic, ensuring the most efficient use of available resources; and improve security by detecting and responding to threats more effectively while maintaining compliance with regulatory requirements.

An NMS proxy 1454 of network management system 10 may output anomaly data 202, an intent, and any other data needed by analysis system 17 to perform techniques described in this disclosure.

Cloud entry point 1446 is a service that runs in cloud computing system 1420 and is the entry point for any connectivity for any edge component to communicate with the cloud.

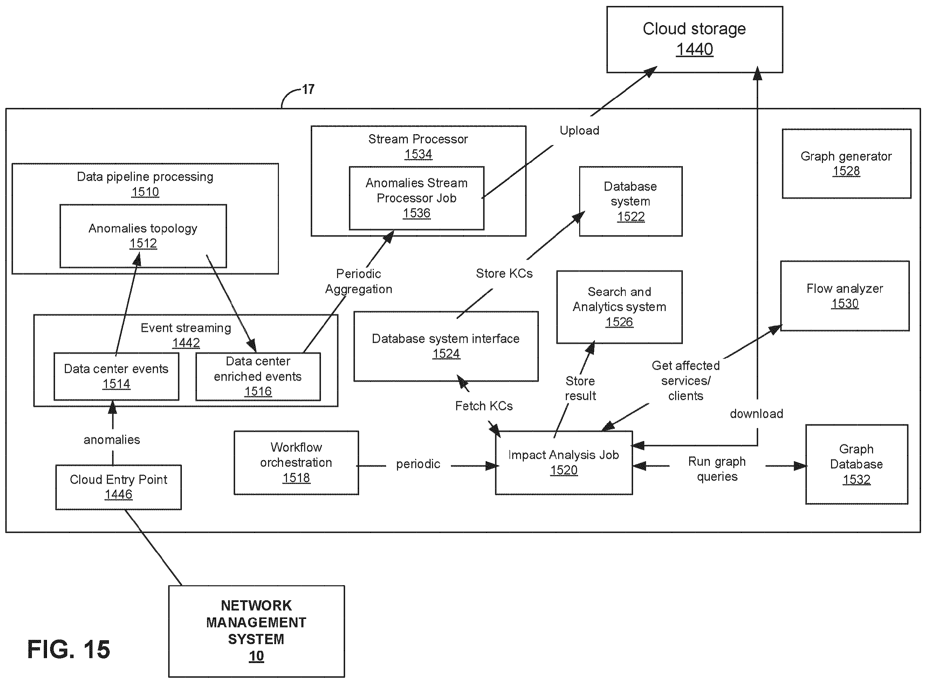

FIG. 15 is an example system implementing analysis system 17 and network management system 10 in further detail. In some examples, analysis system 17 and network management system 10 may be combined in an overall network management system. In this example, anomalies identified by network management system 10 for the intent are sent to Event streaming 1442 through cloud entry point 1446 which is connected to network management system 10. These anomalies, included in a data center events topic 1514, are enriched in data pipeline processing module 1510 implementing an anomalies topology 1512 and sent to a separate topic, data center enriched events topic 1516, in event streaming 1442. Data pipeline processing module 1510 processes data streams. In this example, data pipeline processing module 1510 enables building of topologies (i.e., data pipelines) for processing the data streams. A topic is a named channel or category to which messages are published and from which subscribers receive messages in a pub/sub, lightweight messaging, message queueing, distributed logs, or event streaming platform.

A stream processor 1534 job-anomalies stream processor job 1536-aggregates these enriched anomalies over periodically and stores the aggregated data in cloud storage 1440. Workflow orchestration module 1518 schedules an impact analysis job 1520 periodically that processes this data and stores key anomalies, associated anomalies, affected services and clients to search and analytics system 1526. Analysis system 17 may query elastic search for this data to generate user interfaces, e.g., those depicted in figures and described herein. A job is a discrete, scheduled or triggered operation that performs a specific function within a workflow. A job may be defined by code, configuration, or a task template.

Impact analysis job 1520 runs graph queries against graph database 1532 and analyzes flows, using flow analyzer module 1530, to determine or obtain affected services and clients. A graph generator 1528 generates graphs that are stored to graph database 1532. Graph generator 1528 may generate the graphs from information about the network. Network graph 13 is an example of a graph stored to graph database 1532. Knowledge cards ("KCs") are stored to database system 1522 through database system interface 1524 and can be obtained from database system 1522 by impact analysis job 1520 through database system interface 1524. Each of database system 1522 and graph database 1532 enables creation, management, access, and manipulation of structured data and may include a database and database management system. Graph database 1532 may store and manage data using graph structures in which data is represented as nodes and edges (relationships between nodes), and the nodes and/or edges may each have one or more associated properties. Properties may be expressed as key:value pairs.

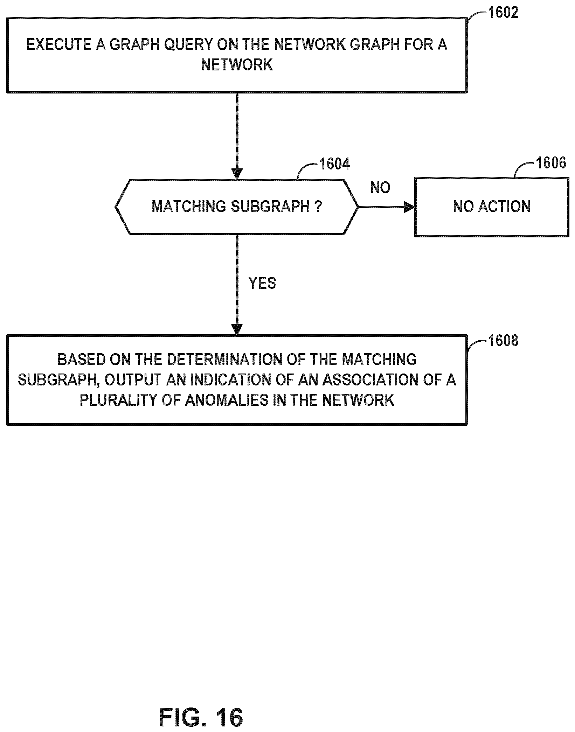

FIG. 16 is a flowchart of an example mode of operation by an analysis system, in accordance with techniques of this disclosure. The flowchart operations are described with respect to analysis system 17, but may be performed by a separate network management system or other system consistent with techniques of this disclosure.

A system (e.g., analysis system 17) obtains a graph query and a network graph for network 2. The network graph includes one or more nodes having one or more properties that indicate a plurality of anomalies for network 2, which are discrepancies with an intent for network 2. The network graph may have other nodes with one or more other properties that indicate other anomalies for network 2. The network graph may be based on an intent for network 2. Analysis system 17 executes a graph query on the network graph for network 2 to determine a matching subgraph of the network graph (1602). The graph query matches on the one or more nodes and the one or more properties of the one or more nodes. That is, the subgraph includes the one or more nodes. If the graph query does not match a subgraph of the network graph (NO branch of 1604), analysis system 17 takes no action (1606). The graph query may be specified using a knowledge card.

Based a determination of a matching subgraph of the network graph (YES branch of 1604), however, analysis system 17 outputs an indication of an association of the plurality of anomalies (1608). The indication of the association of the plurality of anomalies may be a visualization of at least the matching subgraph, an indication of the key anomaly, a list of one more of the plurality of anomalies.

In some cases, based on the indication of the association of the plurality of anomalies, network management system 10 may reconfigure the network to address at least one anomaly of the plurality of anomalies. In some cases, based on the determination of the matching subgraph, analysis system 17 may direct network management system 10 to reconfigure the network to address at least one anomaly of the plurality of anomalies. This may include addressing the key anomaly in particular, which will tend to address the anomalies associated with the key anomaly that may have been identified using the graph query.

The techniques described herein may be implemented in hardware, software, firmware, or any combination thereof. Various components, functional units, and/or modules illustrated in the figures and/or illustrated or described elsewhere in this disclosure may perform operations described using software, hardware, firmware, or a mixture of hardware, software, and firmware residing in and/or executing at one or more computing devices. For example, a computing device may execute one or more of such modules with multiple processors or multiple devices. A computing device may execute one or more of such modules as a virtual machine executing on underlying hardware. One or more of such modules may execute as one or more services of an operating system or computing platform. One or more of such modules may execute as one or more executable programs at an application layer of a computing platform. In other examples, functionality provided by a module could be implemented by a dedicated hardware device. Although certain modules, data stores, components, programs, executables, data items, functional units, and/or other items included within one or more storage devices may be illustrated separately, one or more of such items could be combined and operate as a single module, component, program, executable, data item, or functional unit. For example, one or more modules or data stores may be combined or partially combined so that they operate or provide functionality as a single module. Further, one or more modules may operate in conjunction with one another so that, for example, one module acts as a service or an extension of another module. Also, each module, data store, component, program, executable, data item, functional unit, or other item illustrated within a storage device may include multiple components, sub-components, modules, sub-modules, data stores, and/or other components or modules or data stores not illustrated. Further, each module, data store, component, program, executable, data item, functional unit, or other item illustrated within a storage device may be implemented in various ways. For example, each module, data store, component, program, executable, data item, functional unit, or other item illustrated within a storage device may be implemented as part of an operating system executed on a computing device.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random-access memory (RAM), read-only memory (ROM), nonvolatile random access memory (NVRAM), electrically erasable programmable read-only memory (EEPROM), Flash memory, magnetic or optical data storage media, and the like. In some examples, an article of manufacture may comprise one or more computer-readable storage media. In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described echniques for analyzing anomalies in a network. In an example, a method comprises obtaining, by a system, a graph query and a network graph for a network, wherein the network graph includes one or more nodes having one or more properties that indicate a plurality of anomalies for the network; executing, by the system, the graph query on the network graph for the network to determine a matching subgraph of the network graph, wherein the graph query matches on the one or more nodes and the one or more properties; and based on the determination of the matching subgraph, outputting an indication of an association of the plurality of anomalies.

Further examples of feature combinations taught by the present disclosure are set out in the following numbered clauses.

Clause 1. A system comprising: a memory storing a graph query and a network graph for a network, wherein the network graph includes one or more nodes having one or more properties that indicate a plurality of anomalies for the network; and one or more processors coupled to the memory, wherein the memory stores instructions that, when executed, cause the one or more processors to: execute the graph query on the network graph for the network to determine a matching subgraph of the network graph, wherein the graph query matches on the one or more nodes and the one or more properties; and based on the determination of the matching subgraph, output an indication of an association of the plurality of anomalies.

Clause 2. The system of clause 1, wherein the memory stores an association of a key anomaly and the graph query, wherein the indication of the association of the plurality of anomalies comprises an indication of the key anomaly.

Clause 3. The system of clause 1 or 2, wherein the memory stores an association of the plurality of anomalies and the graph query, wherein the indication of the association of the plurality of anomalies comprises an indication of the plurality of anomalies.

Clause 4. The system of clause 1, 2 or 3, wherein the instructions, when executed, cause the one or more processors to: receive, via an interface, a knowledge card comprising an association of a key anomaly and the graph query.

Clause 5. The system of clause 4, wherein the knowledge card further comprises data indicating the plurality of anomalies, and wherein executing the graph query comprises matching the plurality of anomalies to the one or more properties of the one or more nodes of the network graph.

Clause 6. The system of any preceding clause, wherein the indication of the association of the plurality of anomalies comprises a visualization of at least the matching subgraph.

Clause 7. The system of any preceding clause, wherein the network graph comprises a second network graph, and wherein the memory stores instructions that, when executed, cause the one or more processors to: modify, based on anomaly data indicating the plurality of anomalies, a first network graph to add the one or more properties to the one or more nodes of the first network graph to generate the second network graph.

Clause 8. The system of clause 7, wherein the memory stores instructions that, when executed, cause the one or more processors to: receive, from a network management system, the anomaly data.

Clause 9. The system of clause 7 of 8, wherein the first network graph comprises one of an intent network graph or a network graph that models a configuration and operational state of the network.

Clause 10. The system of any preceding clause, wherein the memory stores an association of one of a synthetic or anticipated anomaly and the graph query, wherein the one of the synthetic or anticipated anomaly indicates a likely impact to a service or client operating over the network, and wherein the memory stores instructions that, when executed, cause the one or more processors to: based the determination of the matching subgraph, output an indication of the one of the synthetic or anticipated anomaly.

Clause 11. The system of clause 10, wherein the indication of the one of the synthetic or anticipated anomaly comprises a visualization of at least the matching subgraph and an added node, connected to the at least the matching subgraph, and representing the service or client.

Clause 12. The system of any preceding clause, wherein the memory stores instructions that, when executed, cause the one or more processors to: based on the determination of the matching subgraph, reconfigure the network to address at least one anomaly of the plurality of anomalies.

Clause 13. The system of any preceding clause, wherein the memory stores instructions that, when executed, cause the one or more processors to: based on the determination of the matching subgraph, direct a network management system to reconfigure the network to address at least one anomaly of the plurality of anomalies.

Clause 14. A method comprising: obtaining, by a system, a graph query and a network graph for a network, wherein the network graph includes one or more nodes having one or more properties that indicate a plurality of anomalies for the network; executing, by the system, the graph query on the network graph for the network to determine a matching subgraph of the network graph, wherein the graph query matches on the one or more nodes and the one or more properties; and based on the determination of the matching subgraph, outputting an indication of an association of the plurality of anomalies.

Clause 15. The method of clause 14, further comprising: obtaining an association of a key anomaly and the graph query; and based on the association of the key anomaly and the graph query, outputting the indication of the association of the plurality of anomalies to include an indication of the key anomaly.

Clause 16. The method of clause 14 of 15, further comprising: obtaining an association of a plurality of anomalies and the graph query; and based on the association of the plurality of anomalies and the graph query, outputting the indication of the association of the plurality of anomalies to include an indication of the plurality of anomalies.

Clause 17. The method of clause 14, 15 or 16, further comprising: obtaining an association of one of a synthetic or anticipated anomaly and the graph query, wherein the one of the synthetic or anticipated anomaly indicates a likely impact to a service or client operating over the network; and based the determination of the matching subgraph, outputting an indication of the one of the synthetic or anticipated anomaly.

Clause 18. The method of any of clauses 14 to 17, further comprising: based on the determination of the matching subgraph, reconfiguring the network to address at least one anomaly of the plurality of anomalies.

Clause 19. The method of any of clauses 14 to 18, further comprising: based on the determination of the matching subgraph, directing a network management system to reconfigure the network to address at least one anomaly of the plurality of anomalies.

Clause 20. Computer-readable media comprising instructions that, when executed, cause processing circuitry to: obtain a graph query and a network graph for a network, wherein the network graph includes one or more nodes having one or more properties that indicate a plurality of anomalies for the network; execute the graph query on the network graph for the network to determine a matching subgraph of the network graph, wherein the graph query matches on the one or more nodes and the one or more properties; and abased on the determination of the matching subgraph, output an indication of an association of the plurality of anomalies.

## Claims

1. A system comprising:
a memory storing a graph query and a network graph for a network, wherein the network graph includes one or more nodes having one or more properties that indicate a plurality of anomalies for the network; and
one or more processors coupled to the memory,
wherein the memory stores instructions that, when executed, cause the one or more processors to:
execute the graph query on the network graph for the network to determine a matching subgraph of the network graph, wherein the graph query matches on the one or more nodes and the one or more properties; and
based on the determination of the matching subgraph, output an indication of an association of the plurality of anomalies.

2. The system of claim 1,
wherein the memory stores an association of a key anomaly and the graph query,
wherein the indication of the association of the plurality of anomalies comprises an indication of the key anomaly.

3. The system of any of claims 1-2,
wherein the memory stores an association of the plurality of anomalies and the graph query,
wherein the indication of the association of the plurality of anomalies comprises an indication of the plurality of anomalies.

4. The system of any of claims 1-3, wherein the instructions, when executed, cause the one or more processors to:
receive, via an interface, a knowledge card comprising an association of a key anomaly and the graph query.

5. The system of claim 4,
wherein the knowledge card further comprises data indicating the plurality of anomalies, and
wherein executing the graph query comprises matching the plurality of anomalies to the one or more properties of the one or more nodes of the network graph.

6. The system of any of claims 1-5, wherein the indication of the association of the plurality of anomalies comprises a visualization of at least the matching subgraph.

7. The system of any of claims 1-6,
wherein the network graph comprises a second network graph, and
wherein the memory stores instructions that, when executed, cause the one or more processors to:
modify, based on anomaly data indicating the plurality of anomalies, a first network graph to add the one or more properties to the one or more nodes of the first network graph to generate the second network graph.

8. The system of claim 7,
wherein the memory stores instructions that, when executed, cause the one or more processors to:
receive, from a network management system, the anomaly data.

9. The system of any of claims 1-8,
wherein the memory stores an association of one of a synthetic or anticipated anomaly and the graph query, wherein the one of the synthetic or anticipated anomaly indicates a likely impact to a service or client operating over the network, and
wherein the memory stores instructions that, when executed, cause the one or more processors to:
based the determination of the matching subgraph, output an indication of the one of the synthetic or anticipated anomaly.

10. The system of claim 9, wherein the indication of the one of the synthetic or anticipated anomaly comprises a visualization of at least the matching subgraph and an added node, connected to the at least the matching subgraph, and representing the service or client.

11. The system of any of claims 1-10, wherein the memory stores instructions that, when executed, cause the one or more processors to:
based on the determination of the matching subgraph, reconfigure the network to address at least one anomaly of the plurality of anomalies.

12. The system of any of claims 1-11, wherein the memory stores instructions that, when executed, cause the one or more processors to:
based on the determination of the matching subgraph, direct a network management system to reconfigure the network to address at least one anomaly of the plurality of anomalies.

13. A method comprising:
obtaining, by a system, a graph query and a network graph for a network, wherein the network graph includes one or more nodes having one or more properties that indicate a plurality of anomalies for the network;
executing, by the system, the graph query on the network graph for the network to determine a matching subgraph of the network graph, wherein the graph query matches on the one or more nodes and the one or more properties; and
based on the determination of the matching subgraph, outputting an indication of an association of the plurality of anomalies.

14. The method of claim 13, further comprising steps corresponding to the functionality recited in any of claims 2-12.

15. Computer-readable media configured with instructions that, when executed, cause processing circuitry to become configured to perform the method of any of claims 13-14.
